(19) Europäisches Patentamt
European Patent Office
Office européen des brevets

(11) **EP 4 576 633 A1**

(12) **EUROPEAN PATENT APPLICATION**
published in accordance with Art. 153(4) EPC

(43) Date of publication:
25.06.2025 Bulletin 2025/26

(21) Application number: 23862501.6

(22) Date of filing: 08.09.2023

(51) International Patent Classification (IPC):
**H04L 5/00** (2006.01)

(52) Cooperative Patent Classification (CPC):
**H04B 7/0456; H04L 5/00**

(86) International application number:
**PCT/CN2023/117680**

(87) International publication number:
**WO 2024/051807 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 09.09.2022 CN 202211105463

(71) Applicant: Huawei Technologies Co., Ltd.
Shenzhen, Guangdong 518129 (CN)

(72) Inventors:
• **GAO, Xiang**
**Shenzhen, Guangdong 518129 (CN)**
• **LIU, Kunpeng**
**Shenzhen, Guangdong 518129 (CN)**
• **RUAN, Liang**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **DATA TRANSMISSION METHOD AND COMMUNICATION APPARATUS**

(57) This application provides a data transmission method and a communication apparatus. In a process of performing THP on a data stream, a network device designs an interference cancellation matrix as a block triangular matrix, and replaces interference cancellation and a modulo operation on all data streams with interference cancellation and a modulo operation between groups of data streams by using the block triangular matrix. This reduces a quantity of data streams on which the interference cancellation and the modulo operation need to be performed, to reduce a calculation amount of the network device, effectively reduce complexity of a precoding process of the network device, and reduce resource consumption. In addition, the network device notifies a terminal device of information about a group of data streams on which power adjustment and the modulo operation need to be performed. This can avoid a case in which the terminal device performs the power adjustment and the modulo operation on all groups of data streams, to effectively reduce processing complexity of the terminal device.

Method 600

| Network device | | Terminal device |

S610: Send indication information, where the indication information indicates power adjustment and a modulo operation that are to be performed on a second group of data streams, and a power adjustment parameter used to perform the power adjustment

S620: After receiving a first group of data streams and the second group of data streams, determine a data signal vector corresponding to each group of data streams

S630: After receiving a DMRS, determine, based on the DMRS, equivalent channel matrices respectively corresponding to the first group of data streams and the second group of data streams

S640: Separately detect, based on the equivalent channel matrices corresponding to the first group of data streams and the second group of data streams and the indication information, data signal vectors corresponding to the first group of data streams and the second group of data streams

FIG. 6

## Description

This application claims priority to Chinese Patent Application No. 202211105463.5, filed with the China National Intellectual Property Administration on September 9, 2022 and entitled "DATA TRANSMISSION METHOD AND COMMUNICATION APPARATUS", which is incorporated herein by reference in its entirety.

## TECHNICAL FIELD

This application relates to the communication field, and more specifically, to a data transmission method and a communication apparatus.

## BACKGROUND

A multiple input and multiple output (multiple input and multiple output, MIMO) system can obtain a larger system capacity by simultaneously performing transmission of a plurality of spatial streams. To ensure transmission performance of the plurality of spatial streams, MIMO precoding is an effective method to reduce inter-user interference or inter-stream interference and increase an effective signal to interference plus noise ratio at a receive end. Based on different signal processing manners, MIMO precoding technologies may include linear precoding and non-linear precoding.

Tomlinson-Harashima precoding (Tomlinson-Harashima precoding, THP) is a non-linear precoding scheme. Because the THP can efficiently implement precoding with low complexity, and has better system performance than conventional linear precoding, the THP is widely researched and applied. However, for a conventional THP technology, in a THP process, interference cancellation and a modulo operation need to be performed on all data streams. Therefore, in the THP process, when a quantity of data streams on which transmission is performed in the MIMO system is large, a matrix dimension is large, and a calculation amount is high, resulting in high complexity of the THP and high resource consumption.

## SUMMARY

This application provides a data transmission method and a communication apparatus. This can avoid a case in which a terminal device performs power adjustment and a modulo operation on all groups of data streams, to effectively reduce processing complexity of the terminal device.

According to a first aspect, a data transmission method is provided. The method includes: A network device sends a plurality of groups of data streams, where each group of data streams includes a plurality of data streams. The network device sends indication information, where the indication information indicates to perform power adjustment and a modulo operation on a part of groups of data streams in the plurality of groups of data streams.

According to the data transmission method provided in the first aspect, the network device notifies a terminal device of information about a group of data streams on which the power adjustment and the modulo operation need to be performed. This can avoid a case in which the terminal device performs the power adjustment and the modulo operation on all groups of data streams, to effectively reduce processing complexity of the terminal device. Further, the terminal device is notified of a power adjustment parameter used during the power adjustment, so that it can be ensured that after being adjusted by using the power adjustment parameter, an equivalent channel corresponding to a DMRS can match an equivalent channel actually experienced by a data channel, to ensure accuracy of detecting a group of data by the terminal device.

In a possible implementation of the first aspect, that a network device sends a plurality of groups of data streams includes: The network device separately sends one group of data streams to a plurality of terminal devices, where each group of data streams corresponds to one terminal device. That the network device sends indication information includes: The network device separately sends the indication information to a part of terminal devices in the plurality of terminal devices. That the indication information indicates to perform power adjustment and a modulo operation on a part of groups of data streams in the plurality of groups of data streams includes: Each piece of indication information indicates the terminal device to perform the power adjustment and the modulo operation on one group of received data streams.

In a possible implementation of the first aspect, each piece of indication information further indicates a power difference between an equivalent channel of one group of data streams corresponding to the terminal device and an equivalent channel corresponding to a DMRS. In this implementation, the terminal device is notified of the power adjustment parameter used during the power adjustment, so that it can be ensured that after being adjusted by using the power adjustment parameter, the equivalent channel corresponding to the DMRS can match the equivalent channel actually experienced by the data channel, to ensure the accuracy of detecting the group of data by the terminal device.

In a possible implementation of the first aspect, each group of data streams in the part of groups of data streams includes a same quantity of data streams.

For example, each group of data streams in the part of groups of data streams includes eight or four data streams.

In a possible implementation of the first aspect, that a network device sends a plurality of groups of data streams includes: The network device separately sends one group of data streams to two terminal devices. That the network device sends indication information includes: The network device sends the indication information to one terminal device in the two terminal devices, where the indication information indicates the terminal device to perform the power adjustment and the modulo operation on one group of received data streams.

In a possible implementation of the first aspect, that a network device sends a plurality of groups of data streams includes: The network device sends the plurality of groups of data streams to one terminal device. That the network device sends indication information includes: The network device sends the indication information to the terminal device, where the indication information indicates to perform the power adjustment and the modulo operation on the part of groups of data streams in the plurality of groups of data streams.

For example, a receiver with a plurality of receive antennas of one terminal device may be split into a plurality of virtual sub-receivers, and each sub-receiver is configured to receive one group of data streams. Each group of data streams may include a different quantity of data streams, or may include a same quantity of data streams. In other words, one terminal device is configured to receive a plurality of groups of data streams, each sub-receiver in the terminal device is configured to receive one group of data streams, and each group of data streams may include a same quantity of data streams or may include a different quantity of data streams.

In a possible implementation of the first aspect, the indication information includes DMRS port numbers corresponding to data streams included in the part of groups of data streams. In this implementation, overheads needed for the indication information can be reduced, communication resource consumption can be reduced, and communication resource utilization can be improved.

In a possible implementation of the first aspect, the indication information includes a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams. In this implementation, on the basis of reducing the overheads needed for the indication information, the indication information has a simple implementation and is easy to implement, to reduce implementation complexity of the indication information.

In a possible implementation of the first aspect, the indication information includes an identifier of an antenna port group corresponding to the part of groups of data streams. In this implementation, signaling overheads for indicating, by the network device, a data stream on which the power adjustment and the modulo operation need to be performed can be reduced, the communication resource consumption can be reduced, and the communication resource utilization can be improved.

For example, the network device may receive an antenna port group identifier that corresponds to each of the part of groups of data streams and that is reported by the terminal device.

In a possible implementation of the first aspect, a DMRS port number corresponding to a data stream on which the power adjustment and the modulo operation are performed in the plurality of groups of data streams is predefined or preconfigured. In this implementation, the signaling overheads needed for the indication information are reduced, and the communication resource consumption is reduced.

In a possible implementation of the first aspect, the indication information further indicates a power difference between an equivalent channel of each group of data streams in the part of groups of data streams and an equivalent channel corresponding to a DMRS. In this implementation, the terminal device is notified of the power adjustment parameter used during the power adjustment, so that it can be ensured that after being adjusted by using the power adjustment parameter, the equivalent channel corresponding to the DMRS can match the equivalent channel actually experienced by the data channel, to ensure the accuracy of detecting the group of data by the terminal device.

In a possible implementation of the first aspect, that the network device sends the plurality of groups of data streams to one terminal device includes: The network device sends two groups of data streams to one terminal device, where the indication information indicates to perform the power adjustment and the modulo operation on one group of data streams in the two groups of data streams.

For example, a receiver of the terminal device is a receiver with eight receive antennas, the eight receive antennas are divided into two groups, and each group corresponds to four receive antennas. Each antenna group corresponds to one MIMO detection module with a maximum quantity of data streams of 4, in other words, one antenna group can receive a maximum of four data streams, and all data streams received by one antenna group may be understood as one group of data streams. To be specific, the receiver with eight receive antennas of the terminal device is split into two virtual sub-receivers, each sub-receiver corresponds to one antenna group, each sub-receiver is configured to receive one group of data streams, and the terminal device may receive two groups of data streams. For each group of data streams, a quantity of data streams included in each group of data streams may be less than or equal to 4.

In a possible implementation of the first aspect, each group of data streams in the plurality of groups of data streams includes a same quantity of data streams.

For example, each group of data streams in the plurality of groups of data streams includes eight or four data streams.

In a possible implementation of the first aspect, before the network device sends the plurality of groups of data streams, the method further includes: The network device separately performs, by using a first matrix, interference cancellation and the modulo operation on the part of groups of data streams in the plurality of groups of data streams, where each group of data streams includes a plurality of data streams, different groups of data streams correspond to different channel matrices, the first matrix is determined based on channel matrices respectively corresponding to the plurality of groups of data streams, and the first matrix is a block triangular matrix. The network device performs, by using a second matrix, non-linear precoding on a group of data streams on which the power adjustment and the modulo operation are performed and a group of data streams on which the power adjustment and the modulo operation are not performed, where the second matrix is determined based on the channel matrices respectively corresponding to the plurality of groups of data streams. Then, the network device sends a plurality of groups of data streams on which the non-linear precoding is performed. In this implementation, in a process of performing THP on a data stream, an interference cancellation matrix is designed as a block triangular matrix, and the interference cancellation and the modulo operation on all data streams (at a data stream granularity) of the terminal device are replaced with the interference cancellation and the modulo operation between groups of data streams (at a granularity of a group of data streams) by using the block triangular matrix, that is, the interference cancellation and the modulo operation are performed only on the part of groups of data streams in the plurality of groups of data streams. This reduces a quantity of data streams on which the network device needs to perform the interference cancellation and the modulo operation, to reduce a calculation amount of the network device, effectively reduce complexity of the precoding process performed by the network device, and reduce resource consumption.

According to a second aspect, a data transmission method is provided. The method includes: A terminal device receives one group of data streams or a plurality of groups of data streams, where each group of data streams includes a plurality of data streams. The terminal device receives indication information, where the indication information indicates to perform power adjustment and a modulo operation on the one group of received data streams, or the indication information indicates to perform power adjustment and a modulo operation on a part of groups of data streams in the plurality of groups of data streams.

According to the method provided in the second aspect, information about a group of data streams on which the power adjustment and the modulo operation need to be performed is received. This can avoid a case in which the power adjustment and the modulo operation are performed on all groups of data streams, to effectively reduce processing complexity of a communication apparatus.

In a possible implementation of the second aspect, when the terminal device receives the one group of data streams, the indication information further indicates a power difference between an equivalent channel of the one group of data streams corresponding to the terminal device and an equivalent channel corresponding to a DMRS. In this implementation, the terminal device is notified of a power adjustment parameter used during the power adjustment, so that it can be ensured that after being adjusted by using the power adjustment parameter, the equivalent channel corresponding to the DMRS can match an equivalent channel actually experienced by a data channel, to ensure accuracy of detecting a group of data by the terminal device.

In a possible implementation of the second aspect, when the terminal device receives the plurality of groups of data streams, the indication information includes DMRS port numbers corresponding to data streams included in the part of groups of data streams. In this implementation, overheads needed for the indication information can be reduced, communication resource consumption can be reduced, and communication resource utilization can be improved.

In a possible implementation of the second aspect, the indication information includes a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams. In this implementation, on the basis of reducing the overheads needed for the indication information, the indication information has a simple implementation and is easy to implement, to reduce implementation complexity of the indication information.

In a possible implementation of the second aspect, the indication information includes an identifier of an antenna port group corresponding to the part of groups of data streams. Signaling overheads for indicating, by the network device, a data stream on which the power adjustment and the modulo operation need to be performed can be reduced, the communication resource consumption can be reduced, and the communication resource utilization can be improved.

For example, the terminal device may report, to the network device, an antenna port group identifier that corresponds to each of the part of groups of data streams.

In a possible implementation of the second aspect, a DMRS port number corresponding to a data stream on which the power adjustment and the modulo operation are performed in the plurality of groups of data streams is predefined or preconfigured. In this implementation, signaling overheads needed for the indication information are reduced, and the communication resource consumption is reduced.

In a possible implementation of the second aspect, the indication information further indicates a power difference between an equivalent channel of each group of data streams in the part of groups of data streams and an equivalent channel corresponding to a DMRS. In this implementation, the terminal device is notified of a power adjustment parameter used during the power adjustment, so that it can be ensured that after being adjusted by using the power adjustment parameter, the equivalent channel corresponding to the DMRS can match the equivalent channel actually experienced by the data channel, to ensure the accuracy of detecting the group of data by the terminal device.

In a possible implementation of the second aspect, that a terminal device receives a plurality of groups of data streams includes: The terminal device receives two groups of data streams, where the indication information indicates to perform the power adjustment and the modulo operation on one group of data streams in the two groups of data streams.

For example, a receiver of the terminal device is a receiver with eight receive antennas, the eight receive antennas are divided into two groups, and each group corresponds to four receive antennas. Each antenna group corresponds to one MIMO detection module with a maximum quantity of data streams of 4, in other words, one antenna group can receive a maximum of four data streams, and all data streams received by one antenna group may be understood as one group of data streams. To be specific, the receiver with eight receive antennas of the terminal device is split into two virtual sub-receivers, each sub-receiver corresponds to one antenna group, each sub-receiver is configured to receive one group of data streams, and the terminal device may receive two groups of data streams. For each group of data streams, a quantity of data streams included in each group of data streams may be less than or equal to 4.

In a possible implementation of the first aspect, each group of data streams in the plurality of groups of data streams includes a same quantity of data streams.

For example, each group of data streams in the plurality of groups of data streams includes eight or four data streams.

According to a third aspect, a communication apparatus is provided. The apparatus includes a module or a unit configured to perform each step according to any one of the first aspect or the possible implementations of the first aspect. The module or unit may be a hardware circuit, may be software, or may be implemented by the hardware circuit in combination with the software. The communication apparatus may be used in the network device in the first aspect, or may be an apparatus (for example, a chip, a chip system, or a circuit) in the network device or an apparatus that can be used in a manner of matching the network device.

In a possible implementation, the communication apparatus includes a transceiver unit and a processing unit. The processing unit is configured to control the transceiver unit to perform signal receiving and sending. The processing unit is configured to generate a plurality of groups of data streams, where each group of data streams includes a plurality of data streams. The transceiver unit is configured to send the plurality of groups of data streams. The transceiver unit is further configured to send indication information, where the indication information indicates to perform power adjustment and a modulo operation on a part of groups of data streams in the plurality of groups of data streams.

According to a fourth aspect, a communication apparatus is provided. The apparatus includes a module or a unit configured to perform each step according to any one of the second aspect or the possible implementations of the second aspect. The module or unit may be a hardware circuit, may be software, or may be implemented by the hardware circuit in combination with the software. The communication apparatus may be used in the terminal device in the second aspect, or may be an apparatus (for example, a chip, a chip system, or a circuit) in the terminal device or an apparatus that can be used in a manner of matching the terminal device.

In a possible implementation, the communication apparatus includes a transceiver unit and a processing unit. The processing unit is configured to control the transceiver unit to perform signal receiving and sending. The transceiver unit is configured to receive one group of data streams or a plurality of groups of data streams, where each group of data streams includes a plurality of data streams. The transceiver unit is further configured to receive indication information, where the indication information indicates to perform power adjustment and a modulo operation on the one group of received data streams, or the indication information indicates to perform power adjustment and a modulo operation on a part of groups of data streams in the plurality of groups of data streams. The processing unit is configured to: perform, based on the indication information, the power adjustment and the modulo operation on the one group of received data streams, or perform the power adjustment and the modulo operation on the part of groups of data streams in the plurality of groups of data streams.

According to a fifth aspect, a communication apparatus is provided. The apparatus includes at least one processor, configured to perform the method according to any one of the first aspect or the possible implementations of the first aspect.

In a possible implementation, the processor executes instructions stored in a memory, to implement the method according to any one of the first aspect or the possible implementations of the first aspect. Optionally, the communication apparatus further includes the memory that stores the instructions. Optionally, the memory and the processor are integrated together or disposed independently.

In a possible implementation, the processor implements the method according to any one of the first aspect or the possible implementations of the first aspect by using a logic circuit of the processor.

In a possible implementation, the communication apparatus further includes a transceiver, configured to: receive a signal and send a signal.

According to a sixth aspect, a communication apparatus is provided. The apparatus includes at least one processor, configured to perform the method according to any one of the second aspect or the possible implementations of the second aspect.

In a possible implementation, the processor executes instructions stored in a memory, to implement the method according to any one of the second aspect or the possible implementations of the second aspect. Optionally, the communication apparatus further includes the memory that stores the instructions. Optionally, the memory and the processor are integrated together or disposed independently.

In a possible implementation, the processor implements the method according to any one of the second aspect or the possible implementations of the second aspect by using a logic circuit of the processor.

In a possible implementation, the communication apparatus further includes a transceiver, configured to: receive a signal and send a signal.

According to a seventh aspect, a communication apparatus is provided. The apparatus includes at least one processor and an interface circuit. The interface circuit is configured to: output a signal and/or input a signal. The at least one processor is configured to perform the method according to any one of the first aspect or the possible implementations of the first aspect.

According to an eighth aspect, a communication apparatus is provided. The apparatus includes at least one processor and an interface circuit. The interface circuit is configured to: output a signal and/or input a signal. The at least one processor is configured to perform the method according to any one of the second aspect or the possible implementations of the second aspect.

According to a ninth aspect, a network device is provided. The network device includes the communication apparatus provided in the third aspect, the network device includes the communication apparatus provided in the fifth aspect, or the network device includes the communication apparatus provided in the seventh aspect.

According to a tenth aspect, a terminal device is provided. The terminal device includes the communication apparatus provided in the fourth aspect, the terminal device includes the communication apparatus provided in the sixth aspect, or the terminal device includes the communication apparatus provided in the eighth aspect.

According to an eleventh aspect, a computer program product is provided. The computer program product includes a computer program. When the computer program is executed by a processor, the computer program is configured to: perform the method according to any one of the first aspect or the possible implementations of the first aspect, or perform the method according to any one of the second aspect or the possible implementations of the second aspect.

According to a twelfth aspect, a computer-readable storage medium is provided. The computer-readable storage medium stores a computer program. When the computer program is executed, the computer program is configured to: perform the method according to any one of the first aspect or the possible implementations of the first aspect, or perform the method according to any one of the second aspect or the possible implementations of the second aspect.

According to a thirteenth aspect, a communication system is provided. The communication system includes the foregoing terminal device and the foregoing network device.

According to a fourteenth aspect, a chip is provided. The chip includes a processor, configured to invoke a computer program from a memory and run the computer program, so that a communication device in which the chip is installed performs the method according to any one of the first aspect or the possible implementations of the first aspect, or performs the method according to any one of the second aspect or the possible implementations of the second aspect.

## BRIEF DESCRIPTION OF DRAWINGS

FIG. 1 is a diagram of an example of a structure of a receiver with eight receive antennas of a terminal device according to an embodiment of this application;

FIG. 2 is a diagram of an example of a process of precoding a data signal by using a THP technology according to an embodiment of this application;

FIG. 3 is a diagram of an architecture of a communication system applicable to an embodiment of this application;

FIG. 4 is an interaction diagram of an example of a data transmission method according to an embodiment of this application;

FIG. 5 is a diagram of an example of a process in which a network device performs THP on a data signal according to an embodiment of this application;

FIG. 6 is an interaction diagram of another example of a data transmission method according to an embodiment of this application;

FIG. 7 is a block diagram of an example of a communication apparatus according to an embodiment of this application;

FIG. 8 is a block diagram of another example of a communication apparatus according to an embodiment of this application;

FIG. 9 is a block diagram of still another example of a communication apparatus according to an embodiment of this application;

FIG. 10 is block diagram of another example of a communication apparatus according to an embodiment of this application;

FIG. 11 is a block diagram of a terminal device according to an embodiment of this application; and

FIG. 12 is a block diagram of a network device according to an embodiment of this application.

## DESCRIPTION OF EMBODIMENTS

The following describes technical solutions of this application with reference to accompanying drawings.

In descriptions of embodiments of this application, "/" means "or" unless otherwise specified. For example, A/B may represent A or B. The term "and/or" in this specification describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a MIMO system, and a communication system evolved after 5G such as a new radio (new radio, NR) communication system or a 6th generation (6th generation, 6G) communication system.

A terminal device mentioned in embodiments of this application may be a device with a wireless transceiver function, and may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to the wireless modem, a vehicle-mounted device, a communication device carried on high-altitude aircraft, a wearable device, an uncrewed aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus that can support the terminal device in implementing the function, for example, a chip system. The apparatus may be mounted in a terminal device or used in a manner of matching a terminal device. In embodiments of this application, the chip system may include a chip, or may include a chip and another discrete component.

A network device mentioned in embodiments of this application is a device having a wireless transceiver function, and is configured to communicate with the terminal device; or may be a device that enables the terminal device to access a wireless network. The network device may be a node in a radio access network, and may also be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network or a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like.

Optionally, network devices in embodiments of this application may further include various forms of base stations, for example, a macro base station, a micro base station (which is also referred to as a small cell), a relay station, a device that implements a function of the base station in a communication system evolved after 5G, a transmission point (transmitting and receiving point, TRP), a transmitting point (transmitting point, TP), and devices that function as base stations in a mobile switching center, device-to-device (device-to-device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud access network (cloud radio access network, C-RAN) system, and a network device in a non-terrestrial network (non-terrestrial network, NTN) communication system, in other words, may be deployed on a high-altitude platform or a satellite. This is not limited in embodiments of this application.

In embodiments of this application, the network device may communicate and interact with a core network device, to provide a communication service for the terminal device. The core network device is, for example, a device in a 5G core network (core network, CN). As a bearer network, the core network provides an interface to a data network, provides communication connection, authentication, management, and policy control for a terminal, and bears a data service, and so on.

A specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key controller). In addition, various storage media described in this specification may represent one or more devices and/or other machine-readable media that are configured to store information. The term "machine-readable media" may include but is not limited to a radio channel, and various other media that can store, contain and/or carry instructions and/or data.

First, several basic terms in this application are described.

Spatial stream (or may be referred to as a spatial layer): For a spatial multiplexing multiple input and multiple output (multiple input and multiple output, MIMO) system, transmission of a plurality of parallel data streams may be simultaneously performed on a same time-frequency domain resource, and each data stream is referred to as one spatial stream. In embodiments of this application, meanings of the "spatial layer", the "spatial stream", and the "data stream" are the same, and descriptions of the three may be replaced with each other. The "spatial layer" may also be referred to as a "stream", and the "spatial stream" and the "data stream" may also be referred to as a "layer". For one terminal device, a quantity of spatial layers (or a quantity of data streams) corresponding to the terminal device is also referred to as a rank (rank).

Precoding technology: When a channel status is known, a transmit end device (for example, a network device) may preprocess a to-be-sent signal by using a precoding matrix that matches a channel, so that a precoded to-be-sent signal is adapted to the channel, to improve transmission performance and improve quality of a received signal, for example, improve a signal to interference plus noise ratio (signal to interference plus noise ratio, SINR). In a specific implementation process, the transmit end device may alternatively perform precoding in another manner. For example, when channel information cannot be learned of, the precoding is performed by using a preset precoding matrix or a weighted processing manner.

Demodulation reference signal (demodulation reference signal, DMRS): The DMRS is a reference signal, and is used to estimate an equivalent channel matrix experienced by a data channel (for example, a physical uplink shared channel (physical uplink shared channel, PUSCH) or a physical downlink shared channel (physical downlink shared channel, PDSCH)) or a control channel (for example, a physical uplink control channel (physical uplink control channel, PUCCH) or a physical downlink control channel (physical downlink control channel, PDCCH)), to detect and demodulate data or control signaling.

Usually, same precoding processing is performed on the DMRS and the data based on a same precoding matrix, to ensure that the DMRS and the data experience a same equivalent channel. It is assumed that a DMRS vector sent by the transmit end device (for example, the network device) is s, a sent data symbol vector is x, a same precoding operation (that is, multiplying by a same precoding matrix P) is performed on the DMRS and the data, and corresponding received signal vectors of a receive end device (for example, the terminal device) may be represented as:

A received data signal vector is $y$: $y = HPx + n = \tilde{H}x + n$; and

a received DMRS vector is $r: r = HPs + n = \tilde{H}s + n$.

H represents a channel matrix of the receive end device, n represents a noise vector corresponding to the receive end device, and $\tilde{H}$ represents an equivalent channel matrix. It can be learned that, an equivalent channel matrix experienced by both a data signal and the reference signal DMRS is $\tilde{H}$. The receive end device (for example, the terminal device uses, based on the known DMRS vector s, a channel estimation algorithm (for example, a least squares (least squares, LS) channel estimation algorithm or a minimum mean square error (minimum mean square error, MMSE) channel estimation algorithm)) may obtain an estimated value of the equivalent channel matrix $\tilde{H}$. MIMO equalization and subsequent demodulation of the data signal may be completed based on the estimated value of the equivalent channel matrix $\tilde{H}$, to obtain detection of the data signal sent by the transmit end device. The equivalent channel matrix may be understood as a joint channel matrix obtained by synthesizing, after the transmit end device performs a signal processing operation like precoding on a signal, a precoding matrix and a propagation channel matrix that is experienced by the signal. Usually, the equivalent channel matrix may be a product of a channel matrix and the precoding matrix.

The MIMO system can obtain a larger system capacity by simultaneously performing transmission of a plurality of spatial streams. To ensure transmission performance of the plurality of spatial streams, MIMO precoding is an effective method to reduce inter-user interference or inter-stream interference and increase an effective signal to interference plus noise ratio at a receive end. Based on different signal processing manners, MIMO precoding technologies can be classified into linear precoding and non-linear precoding. The linear precoding has low complexity and is easy to implement, and is widely applied to an existing MIMO system.

For a multi-user (multiple users, MU) MIMO system, it is assumed that there are K terminal devices (that is, K users) in total, and a quantity of spatial layers (ranks) corresponding to a $k^{th}$ user (that is, a $k^{th}$ terminal device) is R (in other words, the $k^{th}$ terminal device corresponds to R data streams). A transmit data signal vector $S_k$ corresponding to the $k^{th}$ user may be determined by using a formula (1):

$$S_k = (S_{k,1}, S_{k,2}, S_{k,3} ..... S_{k,R})^T \quad (1)$$

In the formula (1), $S_{k,l}$ represents a transmit data symbol corresponding to an $l^{th}$ spatial layer of the $k^{th}$ user, where $1 \leq l \leq R$. A channel matrix between the transmit end device (for example, the network device) and the $k^{th}$ user is denoted as $H_k$. It is assumed that a total of K users perform MU-MIMO pairing transmission, and a precoding matrix corresponding to a data stream corresponding to the $k^{th}$ user is $W_k$. A transmit vector $x$ obtained by performing precoding on data signal vectors corresponding to all the K users may be determined by using a formula (2):

$$x = \begin{bmatrix} W_1, W_2, W_3 ... W_k \end{bmatrix} \begin{bmatrix} S_1 \\ S_2 \\ S_3 \\ . \\ . \\ . \\ S_K \end{bmatrix} \quad (2)$$

In the formula (2), a precoding matrix corresponding to a data stream corresponding to a $1^{st}$ user is $W_1$, and a transmit data signal vector corresponding to the $1^{st}$ user is $S_1$.

Correspondingly, a received signal vector $y_k$ of the $k^{th}$ user may be determined by using a formula (3):

$$y_k = H_k W_k S_k + \sum_{j=1, j \neq k}^{K} H_k W_J S_j + n_k \quad (3)$$

In the formula (3), $n_k$ represents a noise vector corresponding to the $k^{th}$ user, and $\displaystyle\sum_{j=1, j \neq k}^{K} H_k W_J S_j$ represents multi-user interference, that is, interference of other users in all the K users to a received signal of the $k^{th}$ user.

To reduce interference between users and improve MU-MIMO performance, a precoding matrix is usually designed. The linear precoding is a low-complexity, simple, and efficient precoding manner, and is widely applied to an existing MU-MIMO system. Eigen zero forcing (eigen zero forcing, EZF) precoding is a common linear precoding method.

When the data signal is precoded through the EZF precoding, a precoding matrix $W = (W_1, W_2, W_3 .... W_K)$ corresponding to all the K users may be determined according to a formula (5):

$$W = \frac{1}{\alpha} V (V^H V)^{-1} \quad (5)$$

In the formula (5), $\tilde{V} = [\tilde{V}_1 \ \tilde{V}_2 .. \tilde{V}_K]$, where $\tilde{V}_K$ is determined based on a channel matrix $H_k$ of the $k^{th}$ user. In a possible implementation, $\tilde{V}_K$ may be a matrix including R strongest eigenvectors corresponding to the channel matrix $H_k$ of the $k^{th}$ user, that is, $H_k = U_k D_k V_k^H$, where $V_k^H$ is a conjugate matrix of $V_k$, and $\tilde{V}_K$ may be a submatrix including first R column vectors of the matrix $V_k$. $\frac{1}{\alpha}$ represents a power normalization factor.

For the EZF precoding, a higher multi-user channel correlation indicates a smaller corresponding power normalization factor. This causes a more severe power loss and directly affects the MU-MIMO performance.

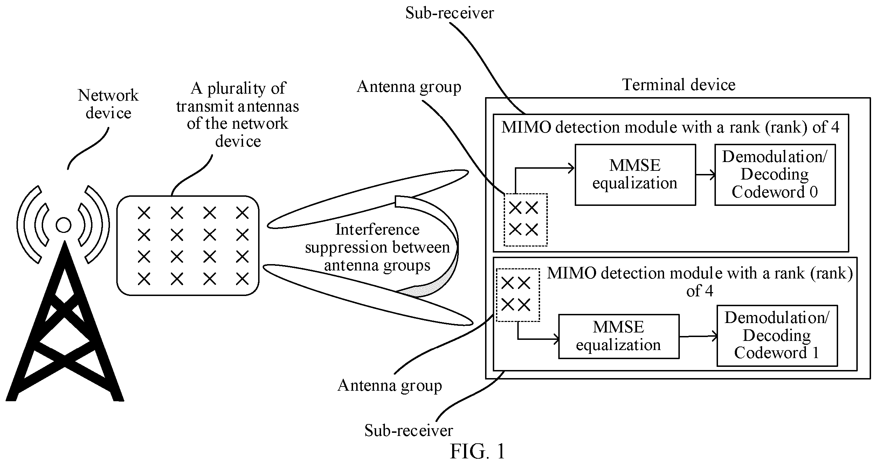

Due to a limited size and cost of the terminal device, currently, most terminal devices support a maximum of four receive antennas. Correspondingly, a quantity of data streams that need to be received by each terminal device does not exceed four streams (that is, a rank (rank)≤4). With continuous improvement of a multi-antenna technology, a quantity of antennas supported by a terminal further increases. For example, eight receive antennas are supported, and a maximum quantity of data streams that can be supported by a single terminal device (that is, a single user) may also increase to 8. However, complexity of receiver detection of the terminal device directly relates to a quantity of receive antennas and a quantity of data streams. Currently, a low-cost and low-complexity receiver structure with eight receive antennas is proposed. FIG. 1 is a diagram of a structure of a receiver with eight receive antennas of a terminal device. The eight receive antennas are divided into two groups, and each group corresponds to four receive antennas. Each antenna group corresponds to one MIMO detection module with a maximum quantity of data streams of 4, in other words, one antenna group can receive a maximum of four data streams, and all data streams received by one antenna group may be understood as one group of data streams. The MIMO detection module is configured to: perform minimum mean square error (minimum mean square error, MMSE) equalization and demodulation on a signal received by the antenna group, and perform decoding by using different codewords (codewords, CWs). The structure of the receiver shown in FIG. 1 may be considered as that one receiver with eight receive antennas is split into two virtual sub-receivers, each sub-receiver corresponds to an antenna group, and only a part of data streams in all data streams are detected. In other words, in the structure shown in FIG. 1, each sub-receiver is configured to receive one group of data streams, and the terminal device may receive two groups of data streams. For each group of data streams, a quantity of data streams included in each group of data streams may be less than or equal to 4.

By using the receiver structure shown in FIG. 1, a baseband processing architecture of an existing four-antenna receiver can be reused to a maximum extent. In addition, by grouping the receive antennas, a quantity of receive antennas corresponding to each sub-receiver and a quantity of data streams that need to be detected are reduced, to greatly reduce detection complexity. Because one receiver with eight receive antennas is equivalently split into two virtual sub-receivers, the network device needs to reduce interference between sub-receivers at a transmit end by using the precoding technology like the EZF described above. However, because an antenna spacing between the antenna groups corresponding to the two sub-receivers is small, channel correlation between the two sub-receivers is high. In the structure shown in FIG. 1, when the network device sends data, the foregoing EZF linear precoding is used. For the terminal device, high correlation between channels of the two sub-receivers causes a severe power loss. Consequently, performance of the receiver of the special structure is severely damaged.

The non-linear precoding changes channel pre-cancellation performed by the linear precoding by performing an operation like matrix inversion, to effectively reduce the power loss and improve the MU-MIMO performance. THP is a non-linear precoding scheme with a trade-off between system performance and complexity. Because of low complexity of implementation and a low system performance loss, the THP is widely researched and applied.

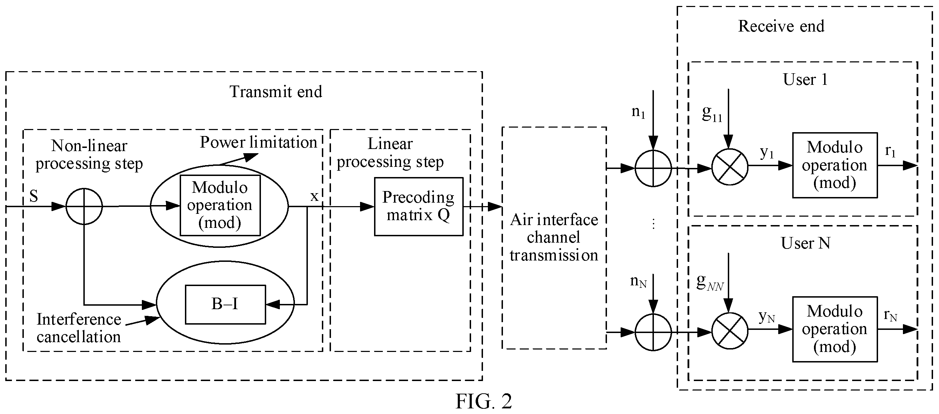

FIG. 2 is a diagram of an example of a process of precoding a data signal by using a THP technology. As shown in FIG. 2, it is assumed that a total of N terminal devices perform MU-MIMO transmission, and a quantity of transmit antennas of a network device is equal to a total quantity of receive antennas of all the terminal devices, and is equal to a total quantity L of transport streams (that is, data streams or spatial layers) of all the terminal devices (or may be referred to as users).

At a transmit end (that is, a network device end), assuming that S represents a transmit modulation symbol vector corresponding to L data streams (that is, L spatial layers), S may be determined according to a formula (6):

$$S = (S_1, S_2, S_3 \ldots S_L)^T \quad (6)$$

In the formula (6), $S_1$ represents a transmit modulation symbol corresponding to a 1st data stream (or a 1st spatial layer), and a feedback matrix B may be determined according to a formula (7):

$$B = GR^H \quad (7)$$

In the formula (7), a matrix R may be obtained by performing QR decomposition on a conjugate transposition matrix of a complete channel matrix H of all the terminal devices: That is, $H^H = QR$, where Q represents a normal orthogonal matrix in the QR decomposition, and the matrix R is an upper triangular matrix. A matrix G is a diagonal matrix, and an element on a main diagonal of the matrix G is a reciprocal of an element on a main diagonal of the matrix R, to be specific, the matrix G may be determined according to a formula (8):

$$G = \begin{bmatrix} r_{11}^{-1} & . & . & . & 0 \\ . & & . & & . \\ . & & & . & . \\ . & & & & . \\ 0 & & . & . & . & r_{LL}^{-1} \end{bmatrix} \quad (8)$$

In the formula (8), $r_{kk}$ represents an element in a kth row and a kth column of the matrix R, and $1 \le k \le L$.

For a kth spatial layer, a transmit vector $x_k$ output after a transmit modulation symbol vector $S_k$ corresponding to the kth spatial layer is precoded by using THP may be determined according to a formula (9):

$$x_k = \mathrm{mod}_\tau \left\{ s_k - \sum_{l=1}^{k-1} B_{k,l} x_l \right\} = s_k - \sum_{l=1}^{k-1} B_{k,l} x_l + d_k \tau = v_k - \sum_{l=1}^{k-1} B_{k,l} x_l \quad (9)$$

In the formula (9), $B_{k,l}$ represents an element in a kth row and an lth. column of the feedback matrix B, $\mathrm{mod}_\tau \{x\}$

$$\mathrm{mod}_\tau \{x\} = x - \left\lfloor \frac{x + \tau/2}{\tau} \right\rfloor \tau$$

represents a modulo operation, and for a given operation parameter $\tau$, , and the modulo operation is used to perform power limitation on the transmit vector. $d_k$ represents an integer part of a value obtained through the modulo operation. It can be learned from the formula (9) that, for the kth spatial layer (a kth data stream), interference of first k-1 spatial layers (first k-1 data streams) to the kth spatial layer needs to be canceled by using the formula (9).

After the foregoing non-linear processing steps are performed, a transmit vector x corresponding to the L data streams may be determined according to a formula (10):

$$x = B^{-1} v \quad (10)$$

In the formula (10), $v = (v_1, v_2, v_3 \ldots v_L)^T$, $v_k = s_k + d_k \tau$, and $1 \le k \le L$.

After the non-linear step, a linear processing step $c = \dfrac{1}{\beta} QB^{-1} v$ is performed by multiplying a unitary matrix Q, to obtain a precoded transmit vector c (or may also be referred to as a transmit symbol vector c), where $\dfrac{1}{\beta}$ is a power normalization factor.

It can be learned from the formulas (9) and (10) that, in the THP, per-data-stream (per-spatial-layer) serial interference cancellation is performed at the transmit end, in other words, the modulo operation and interference cancellation are performed on each data stream (each spatial layer), to effectively suppress multi-user interference and interference between data streams at the transmit end (for example, the network device).

After the foregoing non-linear processing step and linear processing step are performed, the transmit vector may be obtained, and the transmit end device may send (transmit) the transmit vector on an air interface channel or an air interface resource between the transmit end device and the receive end device.

At a receive end (for example, a terminal device side), received signal vectors $y = [y_1, y_2, ..., y_N]^T$ of all the terminal devices may be determined by using a formula (11):

$$y = \frac{1}{\beta} HQB^{-1}v + n = \frac{1}{\beta} G^{-1}v + n \quad (11)$$

In the formula (11), $n = [n_1, n_2, ..., n_N]^T$, where $n$ represents noise vectors corresponding to all the terminal devices. For example, $n_1$ represents a noise vector corresponding to a 1st terminal device, $n_2$ represents a noise vector corresponding to a 2nd terminal device, and $n_N$ represents a noise vector corresponding to an Nth terminal device. $y_1$ represents a received signal vector corresponding to the 1st terminal device, $y_2$ represents a received signal vector corresponding to the 2nd terminal device, and $y_N$ represents a received signal vector corresponding to the Nth terminal device. Meanings of other letters in the formula (11) are the same as meanings of same letters in the foregoing formulas. Because $G^{-1}$ is a diagonal matrix, multi-terminal-device interference and multi-antenna interference are canceled by using the THP, and an MU-MIMO channel is converted into a plurality of parallel sub-channels. It is assumed that a kth spatial layer (data stream) of a uth terminal device corresponds to a kth stream in the total L data streams of all the terminal devices. For the kth spatial layer (data stream) of the uth terminal device, 1 the uth terminal device determines an equivalent channel coefficient $\frac{1}{\beta} g_{kk}$ by using a DMRS, where $g_{kk}$ represents an element in a kth row and a kth column of an equivalent channel matrix, and performs the modulo operation after performing equalization by using the effective channel coefficient $\frac{1}{\beta} g_{kk}$, to obtain a detected symbol. Subsequently, after soft demodulation and channel decoding, a sent information (data) sequence is resumed. For example, as shown in FIG. 2, a 1st stream of the 1st terminal device corresponds to a 1st stream in the total data streams of all the terminal devices, and after $y_1$ is equalized by using an element $g_{11}$ in a 1st row and a 1st column of the equivalent channel matrix, the modulo operation is performed, to obtain an estimation result of a sent information (data) sequence $r_1$ corresponding to the 1st terminal device.

The DMRS is used by the receive end (for example, the terminal device) to perform channel estimation to complete data detection. Usually, a same precoding operation (to be specific, calculation is performed by using a same precoding matrix) is performed on a DMRS and data at the transmit end (for example, the network device), to ensure that the DMRS and the data experience a same equivalent channel.

Downlink transmission is used as an example. Assuming that a downlink data symbol vector sent by the network device is x, and a sent DMRS symbol vector is s, a data symbol vector y received by the terminal device may be represented as: $y = HPx + n$, where H is a channel matrix of the terminal device, n represents a noise vector corresponding to the terminal device, and P represents a precoding matrix. A reference signal vector r received by the terminal device may be represented as: $r = HPs + n$.

The terminal device performs the channel estimation on a reference signal, to obtain an estimation result of an equivalent channel $\tilde{H}$, where $\hat{H} = HP$. The terminal device may complete detection of a transmit data signal x based on the estimation result of the equivalent channel.

However, for the THP, the DMRS cannot use a precoding process completely the same as that of the data, because in a process of precoding a data vector by using the THP, the modulo operation needs to be performed on the data vector, for example, as shown in formula (9), and the modulo operation introduces a disturbance term $d_k\tau$. If the modulo operation is also performed on the DMRS, an original DMRS signal sequence changes. Consequently, the DMRS signal cannot be learned of by the terminal device, and therefore the channel estimation cannot be correctly performed.

For a THP channel estimation problem, different precoding processing needs to be performed on the DMRS and the data. Usually, linear precoding may be used for the DMRS. For the THP, assuming that the DMRS symbol vector sent by the transmit end is s, the transmit end performs the linear precoding on s to obtain an encoded transmit vector x, and this may be determined by using a formula (12):

$$x = Qs \quad (12)$$

In the formula (12), Q represents a unitary matrix.

A DMRS received signal vector r corresponding to the receive end may be determined by using a formula (13):

$$r = HQs + n = R^H s + n \quad (13)$$

In the formula (13), n represents a noise vector corresponding to the terminal device, H is a channel matrix of the terminal device, and $R^H$ represents an equivalent channel matrix. Because a DMRS symbol $s_k$ corresponding to the $k^{th}$ spatial layer is known to the transmit/receive end, an estimation result of the equivalent channel matrix $R^H$ may be obtained by using a channel estimation algorithm (for example, a least squares estimation algorithm or a least mean square error algorithm). $R^H$ is a lower triangular matrix. As described above, the matrix G is the diagonal matrix, and the main diagonal element of the matrix G is the reciprocal of the main diagonal element of the matrix R. Therefore, a main diagonal element of the equivalent channel matrix $R^H$ corresponding to the DMRS is the same as a main diagonal element of an equivalent channel matrix corresponding to a data symbol. For the data symbol, a data signal corresponding to the $k^{th}$ spatial layer may be equalized based on a channel coefficient $\hat{g}_{kk}$ corresponding to a $k^{th}$ row and a $k^{th}$ column in the channel estimation result $R^H$.

In comparison with conventional linear precoding, QR decomposition that is based on the complete channel matrix H of all the terminal devices and per-data-stream (per-spatial-layer) serial interference cancellation (shown in the formula (9)) that is based on the feedback matrix B are added in the THP. A dimension of the complete channel H of all the terminal devices is $\sum_{k=1}^{K} N_R^k \times N_T$, where K represents a quantity of terminal devices, $\sum_{k=1}^{K} N_R^k$ represents a total quantity of receive antennas of all the terminal devices, and $N_T$ represents a quantity of transmit antennas. For large-scale antennas, the quantity of transmit antennas is usually large, for example, 64 transmit antennas. In addition, when a quantity of paired users (that is, the quantity of terminal devices) is large, a value of $\sum_{k=1}^{K} N_R^k$ is also large. Therefore, complexity of the QR decomposition of the channel matrix H is high. In addition, calculation of the feedback matrix B and the feedforward matrix $Q_{[L]}$ also needs to depend on the QR decomposition of the channel matrix H, and a dimension of $Q_{[L]}$ is related to the quantity $N_T$ of transmit antennas or the total quantity $\sum_{k=1}^{K} N_R^k$ of receive antennas. Therefore, in the THP process, a matrix dimension is large, and a calculation amount is high, resulting in high complexity of the THP and high resource consumption.

For example, for the structure of the receiver with eight receive antennas of the terminal device shown in FIG. 1, if a THP scheme is used, performance of the receiver in a scenario in which channel correlation between two sub-receivers is high can be improved. However, because the THP performs per-data-stream (per-spatial-layer) serial interference cancellation, the high complexity and calculation amount are caused.

In view of this, this application provides a data transmission method. In a THP process, an interference cancellation matrix is designed as a block triangular matrix, so that performing per-data-stream interference cancellation on all data streams is changed to performing interference cancellation between groups of data streams, in other words, performing the interference cancellation and the modulo operation only on a part of groups of data streams in a plurality of groups of data streams instead of all groups of data streams in the plurality of groups of data streams. Each group of data streams includes a plurality of data streams, and one terminal device corresponds to (or is configured to receive) one or more groups of data streams. This can reduce a calculation amount in the precoding process, to effectively reduce processing complexity and resource consumption.

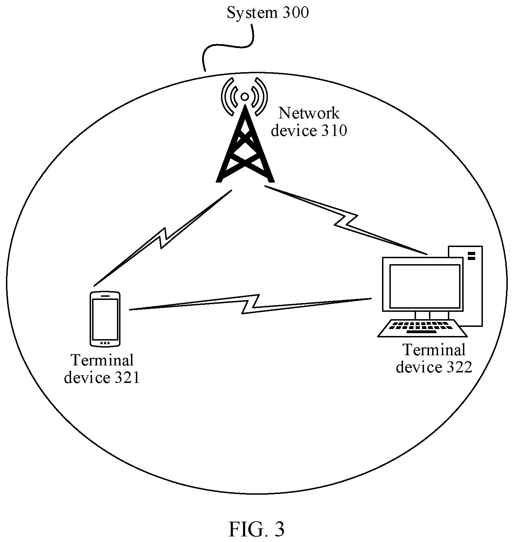

For ease of understanding of embodiments of this application, a communication system applicable to an embodiment of this application is first briefly described with reference to FIG. 3.

FIG. 3 is a diagram of a communication system 300 of a data transmission method applicable to an embodiment of this application. As shown in FIG. 3, the communication system 300 includes three communication devices, for example, a network device 310, a terminal device 321, and a terminal device 322. Data transmission may be performed between the terminal device 321 and the terminal device 322 in a device-to-device (device-to-device, D2D) communication manner. A link between the terminal devices may be referred to as a sidelink. Data communication may be performed between the network device 310 and at least one of the terminal device 321 and the terminal device 322. For example, the network device 310 may send a DMRS, a data stream, and the like to at least one of the terminal device 321 and the terminal device 322. In the process in which the network device 310 sends the DMRS and the data stream to at least one of the terminal device 321 and the terminal device 322, the data transmission method provided in this application may be used. In a process in which at least one of the terminal device 321 and the terminal device 322 receives the data stream, the data transmission method provided in this application may also be used.

In a possible implementation, a receive antenna structure of at least one terminal device of the terminal device 321 and the terminal device 322 may be shown in FIG. 1. To be specific, the terminal device 321 or the terminal device 322 has eight receive antennas, the eight receive antennas are divided into two antenna groups, and each antenna group corresponds to four receive antennas. Each antenna group corresponds to a MIMO detection module with a maximum rank (rank) of 4. In other words, a receiver with eight receive antennas of one terminal device is split into two virtual sub-receivers, and each sub-receiver corresponds to one antenna group and is configured to receive one group of data streams. In other words, the terminal device is configured to receive two groups of data streams, and each sub-receiver in the terminal device is configured to receive one group of data streams. For example, each group of data streams includes four data streams, in other words, one sub-receiver detects only four data streams in eight data streams received by the terminal device.

In another possible implementation, the receive antenna structure of at least one of the terminal device 321 and the terminal device 322 may alternatively be different from that in FIG. 1. For example, the terminal device 321 or the terminal device 322 has a plurality of (for example, four, eight, or 16) receive antennas, and the plurality of receive antennas are grouped into one antenna group. In other words, a multi-receive-antenna receiver of one terminal device may not be split into a plurality of virtual sub-receivers, in other words, one terminal device corresponds to one receiver. One terminal device corresponds to (or is configured to receive) one group of data streams. A receiver in the terminal device is configured to detect the group of data streams. For example, the group of data streams may include four, six, or eight data streams.

In still another possible implementation, the receive antenna structure of at least one of the terminal device 321 and the terminal device 322 may alternatively be different from that in FIG. 1. For example, the terminal device 321 or the terminal device 322 has a plurality of (for example, four, eight, or 16) receive antennas. The plurality of receive antennas may be divided into S antenna groups, and S is greater than or equal to 2. For example, a value of S may be 3, 4, or 5. This is not limited in this embodiment of this application. Optionally, a quantity of receive antennas corresponding to (or included in) each antenna group may be the same or may be different. Each antenna group corresponds to one largest MIMO detection module, and a maximum value of a rank (rank) of the MIMO detection module is the same as a quantity of receive antennas included in the antenna group. In other words, a receiver with a plurality of receive antennas of one terminal device is split into S virtual sub-receivers, and each sub-receiver is configured to receive one group of data streams. Optionally, each group of data streams may include a different quantity of data streams. In other words, one terminal device is configured to receive S groups of data streams, each sub-receiver in the terminal device is configured to receive one group of data streams, and each group of data streams may include a same quantity of data streams or may include a different quantity of data streams.

It should be understood that the communication system shown in FIG. 3 may further include more network nodes, for example, terminal devices or network devices. The network devices or the terminal devices included in the communication system shown in FIG. 3 may be the network devices or the terminal devices in the foregoing various forms. Details are not described one by one in the figure in embodiments of this application.

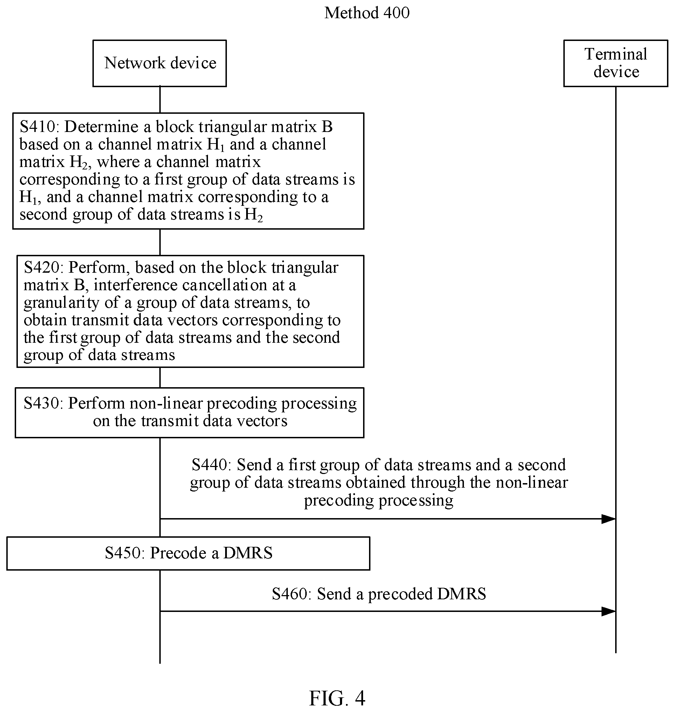

The following describes in detail a data transmission method provided in this application with reference to FIG. 4. FIG. 4 is an interaction diagram of a data transmission method 400 according to an embodiment of this application. The method 400 may be applied to the scenario shown in FIG. 3, and certainly may also be applied to another communication scenario. This is not limited in this embodiment of this application.

It should be further understood that, in this embodiment of this application, the method is described by using an example in which the method is performed by a terminal device and a network device. By way of example, and not limitation, the method may alternatively be performed by chips, chip systems, processors, or the like used in the terminal device and the network device.

In the following example, an example in which there is one terminal device and a receiver structure of the terminal device is the receiver structure shown in FIG. 1 is used for description, to be specific, the receiver structure of the terminal device includes two virtual sub-receivers. Each sub-receiver corresponds to one antenna group, and one antenna group is used to receive one group of data streams, in other words, the terminal device is used to receive two groups of data streams. For example, each group of data streams includes four data streams, and one sub-receiver detects only four data streams in eight data streams received by the terminal device. However, it should be understood that this should not constitute any limitation on this embodiment of this application. For example, in this embodiment of this application, there may be a plurality of terminal devices. A receiver structure of any terminal device may include more sub-receivers (for example, three or four sub-receivers), in other words, any terminal device may be configured to receive more groups of data streams. Alternatively, a receiver structure of any terminal device may not be divided into a plurality of sub-receivers, to be specific, the terminal device corresponds to one sub-receiver, in other words, any terminal device may be configured to receive one group of data streams. This is not limited herein in this embodiment of this application.

As shown in FIG. 4, the method 400 shown in FIG. 4 may include S410 to S460. The following describes in detail each step in the method 400 with reference to FIG. 4.

It is assumed that a quantity $N_T$ of transmit antennas of the network device is 64, the terminal device uses the eight receive antennas shown in FIG. 1, and a receiver of the terminal device is equivalently split into K (K=2) sub-receivers for MIMO transmission. A quantity $N_R^K$ of receive antennas of a kth sub-receiver is 4 (k=1 or 2). In other words, a quantity of receive antennas of a 1st sub-receiver (a sub-receiver 1) and a quantity of receive antennas of a 2nd sub-receiver (a sub-receiver 2) are both 4. A quantity $R_k$ of data streams (spatial layers) corresponding to the kth sub-receiver is 4 (k=1 or 2), in other words, quantities of data streams corresponding to the 1st sub-receiver and the 2nd sub-receiver are both 4. In other words, the 1st sub-receiver receives a first group of data streams, and the first group of data streams includes four data streams. The 2nd sub-receiver receives a second group of data streams, and the second group of data streams includes four data streams. A channel matrix corresponding to the 1st sub-receiver (the first group of data streams) is $H_1$, and a channel matrix corresponding to the 1st sub-receiver (the second group of data streams) is $H_2$.

S410: The network device determines a block triangular matrix B based on the channel matrix $H_1$ and the channel matrix $H_2$, where the channel matrix corresponding to the first group of data streams is $H_1$, and the channel matrix corresponding to the second group of data streams is $H_2$.

In some possible implementations, the block triangular matrix B may be determined by using a formula (14):

$$B = \begin{pmatrix} I & 0 \\ B_{21} & I \end{pmatrix} \quad (14)$$

In the formula (14), I represents a unit matrix whose dimension is $R_K \times R_K$, and a dimension of a matrix $B_{21}$ is $R_K \times R_K$.

In some possible implementations, the matrix $B_{21}$ may be determined by using a formula (15):

$$B_{21} = \left[ \left( H_2 F_2 \right)^H H_2 F_2 \right]^{-1} \left( H_2 F_2 \right)^H H_2 F_1 \quad (15)$$

In the formula (15), $F_1 = V_1^{(1)}$, where $V_1^{(1)}$ represents a submatrix including $R_1$ eigenvectors corresponding to $R_1$ strongest (largest) eigenvalues after singular value decomposition (singular value decomposition, SVD) is performed on the channel matrix $H_1$. A process of performing the singular value decomposition on the channel matrix $H_1$ may be represented by using a formula (16):

$$H_1 = U_1 D_1 V_1^H \quad (16)$$

In the formula (16), matrices $U_1$ and $D_1$ are matrices known in the singular value decomposition process, $V_1^H$ may be calculated by using the formula (16), and $V_1^H$ is a conjugate matrix of a matrix $V_1$, in other words, the matrix $V_1$ may be obtained through calculation based on $V_1^H$. In other words, $V_1^{(1)}$ may be a submatrix including vectors of first $R_1$ columns of the matrix $V_1$.

In the formula (15), $F_2 = V_1^{(0)} \widetilde{V}_2^{(1)}$, where $V_1^{(0)}$ represents a submatrix including $R_1$ eigenvectors corresponding to $R_1$ smaller eigenvalues after the SVD decomposition is performed on the channel matrix $H_1$. In other words, $V_1^{(0)}$ may be a submatrix including vectors of last $R_1$ columns of the matrix $V_1$. $\widetilde{V}_2^{(1)}$ represents a submatrix including $R_2$ eigenvectors corresponding to $R_2$ strongest (largest) eigenvalues after the SVD decomposition is performed on a matrix $H_2 V_1^{(0)}$. A process of performing the singular value decomposition on the matrix $H_2 V_1^{(0)}$ may be represented by using a formula (17):

$$H_2 V_1^{(0)} = U_2 D_2 V_2^H \quad (17)$$

In the formula (17), matrices $U_2$ and $D_2$ are matrices known in the singular value decomposition process, $V_2^H$ may be calculated by using the formula (17), and $V_2^H$ is a conjugate matrix of a matrix $V_2$, in other words, the matrix $V_2$ may be obtained through calculation based on $V_2^H$. In other words, $\widetilde{V}_2^{(1)}$ may be a submatrix including vectors of first $R_2$ columns of the matrix $V_2$.

S420: The network device performs, based on the block triangular matrix B, interference cancellation at a granularity of a group of data streams, to obtain transmit data vectors corresponding to the first group of data streams and the second group of data streams.

For example, it is assumed that a quantity of data streams (spatial layers) included in a $k^{th}$ group of data streams corresponding to the $k^{th}$ sub-receiver is $R_k$. For example, the $1^{st}$ sub-receiver corresponds to the first group of data streams, and the first group of data streams includes four data streams. The $2^{nd}$ sub-receiver corresponds to the second group of data streams, and the second group of data streams also includes four data streams. In other words, both $R_1$ and $R_2$ may be 4. A data signal vector $s_k$ transmitted by the network device to the $k^{th}$ sub-receiver may be determined by using a formula (18):

$$s_k = (s_{k,1}, s_{k,2}, s_{k,3} \ldots s_{k,R_k})^T \quad (18)$$

In the formula (18), $s_{k,l}$ represents a transmit data symbol corresponding to an $l^{th}$ spatial layer of the $k^{th}$ sub-receiver, where $1 \leq l \leq R_k$.

For $R_1$ (for example, four) data streams corresponding to the $1^{st}$ sub-receiver, in other words, the $1^{st}$ sub-receiver corresponds to the first group of data streams, the interference cancellation does not need to be performed, and a transmit vector corresponding to the $R_1$ data streams (that is, the first group of data streams) of the $1^{st}$ sub-receiver is $x_1 = s_1$, where $s_1$ represents a data signal vector of the first group of data streams transmitted by the network device to the $1^{st}$ sub-receiver.

For $R_2$ (for example, four) data streams (that is, the second group of data streams) corresponding to the $2^{nd}$ sub-receiver, the interference cancellation and the modulo operation may be performed by using a formula (19):

$$x_2 = \text{mod}\langle s_2 - B_{21}x_1 \rangle = v_2 - B_{21}x_1 \quad (19)$$

In the formula (19), $v_2 = s_2 + d_2\tau$, where $s_2$ represents a data signal vector of the second group of data streams transmitted by the network device to the $2^{nd}$ sub-receiver, and $x_2$ represents a transmit vector corresponding to the second group of data streams transmitted by the network device to the $2^{nd}$ sub-receiver. $d_2\tau$ represents a disturbance vector added after the modulo operation is performed on a given operation parameter $\tau$.

Interference of the first group of data streams to the second group of data streams is canceled by using the formula (19), in other words, the interference cancellation and the modulo operation at the granularity of the group of data streams are performed, so that the transmit vector $x_2$ corresponding to the second group of data streams transmitted by the network device to the $2^{nd}$ sub-receiver may be obtained.

By using the foregoing processing process, the transmit vector $x_1$ corresponding to the first group of data streams transmitted by the network device to the $1^{st}$ sub-receiver and the transmit vector $x_2$ corresponding to the second group of data streams transmitted by the network device to the $2^{nd}$ sub-receiver may be obtained. $s_1$ and $s_2$ may be understood as data vectors before the interference cancellation and the modulo operation on the data signal vectors. $x_1$ and $x_2$ may be understood as transmit data vectors after the interference cancellation and the modulo operation on the data signal vectors.

Based on $x_1$ and $x_2$, after the interference cancellation and the modulo operation are performed at a transmit end (that is, a network device side), a transmit data vector $\begin{pmatrix} x_1 \\ x_2 \end{pmatrix}$ may be determined by using a formula (20):

$$\begin{pmatrix} x_1 \\ x_2 \end{pmatrix} = \begin{pmatrix} s_1 \\ v_2 \end{pmatrix} - (B - I)\begin{pmatrix} x_1 \\ x_2 \end{pmatrix} \quad (20)$$

S430: The network device performs non-linear precoding processing on the transmit data vectors.

In some implementations, after performing the interference cancellation and the modulo operation, the network device multiplies the transmit data vector $\begin{pmatrix} x_1 \\ x_2 \end{pmatrix}$ by a precoding matrix $\left(F_1 \quad \frac{1}{\beta}F_2\right)$, and an obtained precoded transmit signal vector z may be determined by using a formula (21):

$$z = P\left(\mathbf{F}_1 \quad \frac{1}{\beta}\mathbf{F}_2\right)\begin{pmatrix}\mathbf{x}_1\\\mathbf{x}_2\end{pmatrix} = P\left(\mathbf{V}_1^{(1)} \quad \frac{1}{\beta}\mathbf{V}_1^0\widetilde{\mathbf{V}}_2^{(1)}\right)\begin{pmatrix}\mathbf{x}_1\\\mathbf{x}_2\end{pmatrix} \quad (21)$$

In the formula (21), $\dfrac{1}{\beta}$ represents a power normalization factor, and P represents a power control factor corresponding to the transmit data vector $\begin{pmatrix}\mathbf{x}_1\\\mathbf{x}_2\end{pmatrix}$. In a possible implementation, a value of P may be 1. Because $x_2$ is obtained by performing the interference cancellation and the modulo operation, transmit power is increased, and a function of $\dfrac{1}{\beta}$ is to limit the transmit power.

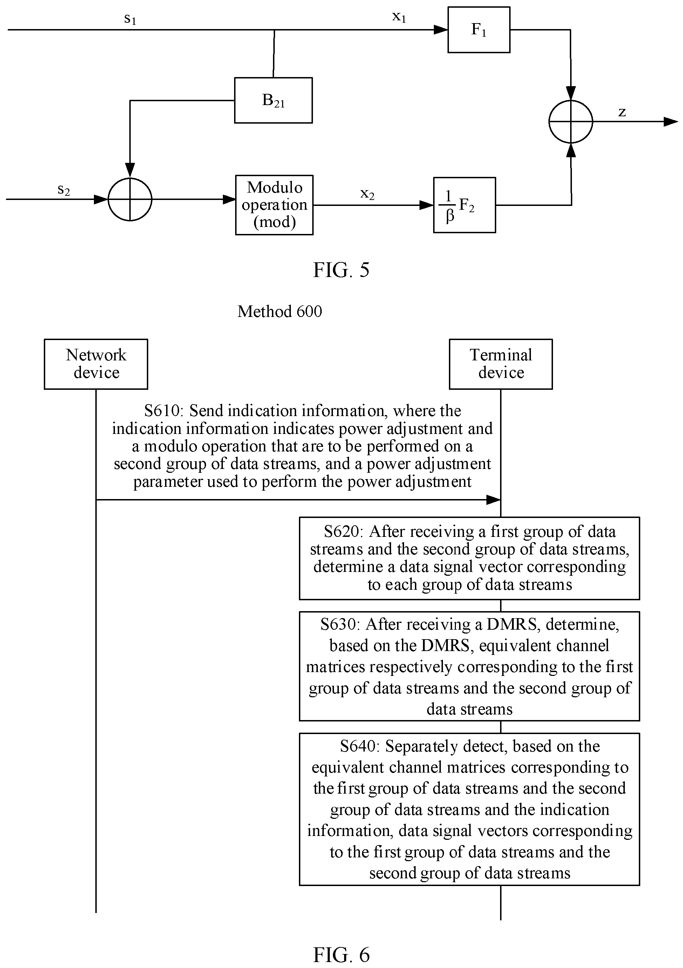

FIG. 5 shows the foregoing processing process of S410 to S430. The process of S410 to S430 may be understood as a process in which a network device performs THP on a data signal. As shown in FIG. 5, $s_1$ represents a data signal vector of a first group of data streams transmitted by the network device to a 1st sub-receiver. $s_2$ represents a data signal vector of a second group of data streams transmitted by the network device to a 2nd sub-receiver. $s_1$ and $s_2$ may be understood as data signal vectors before the interference cancellation and the modulo operation on the data signal vectors. For $s_1$, that is, the first group of data streams, the interference cancellation and the modulo operation do not need to be performed, that is, $x_1=s_1$. For $s_2$, that is, the second group of data streams, the interference cancellation and the modulo operation need to be performed by using a matrix $B_{21}$. After the interference cancellation and the modulo operation are performed on $s_2$ by using the matrix $B_{21}$, a transmit vector $x_2$ corresponding to a data stream transmitted by the 2nd sub-receiver corresponding to $s_2$ is obtained. After $x_1$ and $x_2$ are obtained, non-linear precoding is separately performed on $x_1$ and $x_2$ by using precoding matrices $F_1$ and $\dfrac{1}{\beta}F_2$. After the non-linear precoding is performed, a data stream (that is, a transmit signal vector z) that needs to be sent to a terminal device is obtained, and the network device may send the data stream to the terminal device.

S440: The network device sends, to the terminal device, a first group of data streams and a second group of data streams obtained through the non-linear precoding processing. Correspondingly, the terminal device receives the first group of data streams and the second group of data streams. In other words, the network device sends, to the terminal device, a data stream (or may be referred to as a data signal) obtained through the non-linear precoding processing. Correspondingly, the terminal device receives the data stream obtained through the nonlinear precoding processing.

After S430, the network device may obtain the transmit signal vector z corresponding to the terminal device, that is, a transmit signal vector z corresponding to the first group of data streams and the second group of data streams, so that the network device may send a data stream to the terminal device by using a communication network (for example, a 4G or 5G network) between the network device and the terminal device. In other words, the network device sends the signal vector z to the terminal device.

According to the foregoing method, in a process of performing the THP on the data stream, the network device designs an interference cancellation matrix as a block triangular matrix, and uses the block triangular matrix, so that performing the interference cancellation and the modulo operation on both a data stream corresponding to the 1st sub-receiver and a data stream corresponding to the 2nd sub-receiver is changed into performing the interference cancellation and the modulo operation only on a data stream corresponding to the 2nd sub-receiver. In other words, the interference cancellation and the modulo operation on all data streams (at a data stream granularity) of the terminal device are replaced with the interference cancellation and the modulo operation between groups of data streams (at a granularity of a group of data streams or a sub-receiver granularity) by using the block triangular matrix, and each group of data streams corresponds to one sub-receiver, that is, the interference cancellation and the modulo operation are performed only on a part of groups of data streams in a plurality of groups of data streams. This reduces a quantity of data streams on which the network device needs to perform the interference cancellation and the modulo operation, to reduce a calculation amount of the network device, effectively reduce complexity of a precoding process performed by the network device, and reduce resource consumption.

Optionally, the method 400 may further include S450 and S460.

S450: The network device precodes a DMRS.

Because the THP performs the modulo operation (as shown in the formula (19)) on a signal of a part of data streams, a disturbance amount $d_{2\tau}$ is introduced on a transmit symbol. If the modulo operation is also performed on the DMRS, the DMRS is blurred, and consequently, an estimation result of an equivalent channel estimated by a receive end (that is, the terminal device) based on the DMRS is affected. Therefore, for the DMRS signal, a precoding processing manner different from that of the data signal needs to be used.

In a possible implementation, it is assumed that a DMRS symbol vector corresponding to a $k^{th}$ sub-receiver is $p_k$ (k=1 or 2), to be specific, a DMRS symbol vector corresponding to the $1^{st}$ sub-receiver is $p_1$, and a DMRS symbol vector corresponding to the $2^{nd}$ sub-receiver is $p_2$. $p_k$ may be determined by using a formula (22):

$$\mathrm{p}_k = (\mathrm{p}_{k,1}, \mathrm{p}_{k,2}, \mathrm{p}_{k,3} \cdots \mathrm{p}_{k,R_k})^T \quad (22)$$

In the formula (22), $p_{k,j}$ represents a DMRS corresponding to a $j^{th}$ DMRS port of the $k^{th}$ sub-receiver, and $1 \leq j \leq R_k$. $R_k$ represents a data stream (spatial layer) corresponding to the $k^{th}$ sub-receiver. For example, a value of a quantity $R_1$ of data streams corresponding to the $1^{st}$ sub-receiver may be 4, and a value of a data stream $R_1$ corresponding to the $2^{nd}$ sub-receiver may also be 4.

A process in which the network device precodes the DMRS symbol vector $p_k$ corresponding to the two sub-receivers may be represented by using a formula (23):

$$d = P(F_1 \quad F_2) \begin{pmatrix} \mathrm{p}_1 \\ \mathrm{p}_2 \end{pmatrix} \quad (23)$$

In the formula (23), d represents a transmit signal vector, that is, a precoded DMRS, obtained by precoding, by the network device, the DMRS symbol vectors corresponding to the two sub-receivers. $F_1$ and $F_2$ may be obtained by using the formula (16) and the formula (17) respectively.

Usually, DMRS signals corresponding to different DMRS ports are orthogonal sequences, in other words, the DMRSs use orthogonal ports. At the receive end (that is, a terminal device side), the terminal device may estimate an equivalent channel based on a received DMRS.

S460: The network device sends the precoded DMRS to the terminal device. Correspondingly, the terminal device receives the precoded DMRS.

In some possible implementations, the terminal device may receive the DMRS on a corresponding DMRS port based on a DMRS port indicated by the network device. For example, the $1^{st}$ sub-receiver in the terminal device may receive the DMRS on a corresponding DMRS port, and the $2^{nd}$ sub-receiver in the terminal device may also receive the DMRS on a corresponding DMRS port.

For example, the network device may indicate the DMRS port by using an antenna port (Antenna port(s)) field included in downlink control information (downlink control formation, DCI), and the terminal device may determine the DMRS port based on the antenna port field, to receive the DMRS on the DMRS port. In addition, a quantity of DMRS ports indicated in the antenna port field is the same as a quantity of data streams sent by the network device to the terminal device.

In some embodiments of this application, because the network device performs the interference cancellation and the modulo operation only on the second group of data streams corresponding to the $2^{nd}$ sub-receiver, the network device needs to notify the terminal device that the modulo operation also needs to be performed on the second group of data streams received by the $2^{nd}$ sub-receiver, so that the terminal device obtains an accurate data signal.

In addition, for the data signal, it can be learned from the formula (21) that, in a process of performing the non-linear precoding on the second group of data streams corresponding to the $2^{nd}$ sub-receiver, the power limitation is performed by using the power normalization factor $\dfrac{1}{\beta}$. However, in a process of performing the non-linear precoding on the first group of data streams corresponding to the $1^{st}$ sub-receiver, no power limitation is performed. Therefore, a difference between power of an equivalent channel obtained by the $2^{nd}$ sub-receiver based on the received DMRS and power of an equivalent channel experienced by the $2^{nd}$ group of data stream is the power normalization factor $\dfrac{1}{\beta}$. Power of an equivalent channel obtained by the $1^{st}$ sub-receiver based on the received DMRS is the same as power of an equivalent channel experienced by the $1^{st}$ group of data stream. Therefore, the network device further needs to notify the terminal device that power adjustment needs to be performed on the second group of data streams received by the $2^{nd}$ sub-receiver.

In some possible implementations, the network device may further send a power adjustment parameter to the terminal device. For example, the network device may send indication information to the terminal device, where the indication information indicates a power difference value between the equivalent channel obtained by the $2^{nd}$ sub-receiver based on the received DMRS and the equivalent channel experienced by the second group of data streams. Therefore, the terminal device may detect the received second group of data streams based on the power adjustment parameter and the equivalent channel that is obtained based on the DMRS.

Therefore, in some other possible implementations of this application, FIG. 6 is an interaction diagram of a data transmission method 600 according to another embodiment of this application. It should be understood that the method shown in FIG. 6 may be performed after the method 400 shown in FIG. 4 is performed, or the method shown in FIG. 6 may be independently performed. This is not limited in this embodiment of this application.

When the method shown in FIG. 6 is independently performed, a specific implementation in which a network device performs interference cancellation and a modulo operation on a part of groups of data streams in a plurality of groups of data streams is not limited in this embodiment of this application. For example, a specific manner in which the network device performs the interference cancellation and the modulo operation on one group of data streams in two groups of data streams may be the same as or different from that in the method 400. This is not limited herein in this embodiment of this application.

As shown in FIG. 6, the method 600 shown in FIG. 6 may include S610 to S640. The following describes in detail each step in the method 600 with reference to FIG. 6. For ease of description, in the example shown in FIG. 6, the example shown in FIG. 4 continues to be used, to be specific, a scenario in which the network device performs interference cancellation and a modulo operation on one group of data streams (a second group of data streams) in two groups of data streams corresponding to one terminal device continues to be used as an example for description.

S610: The network device sends indication information to the terminal device, where the indication information indicates power adjustment and a modulo operation that are to be performed on the second group of data streams, and a power adjustment parameter used to perform the power adjustment. For example, the power adjustment parameter may be a power difference between an equivalent channel of the second group of data streams and an equivalent channel corresponding to a DMRS.

Optionally, before S610, the network device may perform, by using a block triangular matrix, the interference cancellation and the modulo operation on one group of data streams (for example, the second group of data streams) in the two groups of data streams corresponding to the terminal device.

It may be understood that, in this embodiment of this application, the indication of performing power adjustment and a modulo operation on the second group of data streams and the indication of the power adjustment parameter may be performed by using same indication information, or may be performed by using different indications respectively. This is not limited in this embodiment of this application.

In some possible implementations, for a case in which the power adjustment and the modulo operation are indicated to be performed on the second group of data streams, a quantity of DMRS ports indicated in an antenna port field in DCI sent by the network device is the same as a quantity of data streams transmitted to the terminal device, in other words, one DMRS port corresponds to one data stream. Therefore, the network device may indicate, to the terminal device, a DMRS port corresponding to a data stream included in a group of data streams (that is, the second group of data streams) on which the power adjustment and the modulo operation are performed, in other words, indicate, to the terminal device, a DMRS port corresponding to a data stream received by a 2nd sub-receiver. After receiving the indication information, the terminal device may determine the DMRS port, determine the data stream corresponding to the DMRS port, and finally determine the data stream included in the group of data stream (that is, the second group of data streams) on which the power adjustment and the modulo operation need to be performed.

For example, for a case in which a DMRS port corresponding to a data stream on which the power adjustment and the modulo operation are performed is indicated, the network device may indicate the DMRS port in a form of a bitmap (bitmap). For example, Table 1 shows an example of an antenna port field indication relationship table used when a DMRS type is configured as a type 1 (dmrs-Type=1) and a symbol occupied by a longest DMRS is configured as two symbols (maxLength=2).

Table 1: Antenna port indication table (dmrs-Type=1 and maxLength=2)

| One codeword (one codeword) Codeword 0 enabled (codeword 0 enable) Code word 1 disabled (codeword 1 disable) | | | | Two codewords (one codeword) Codeword 0 enabled (codeword 0 enable) Codeword 1 enabled (codeword 1 enable) | | | |
|---|---|---|---|---|---|---|---|
| Value (Value) | Quantity of CDM groups without data (Number of CDM group(s) without data) mapping | DMRS port (DMRS port(s)) | Quantity of front-load symbols (Number of front-load symbols) | Value (Value) | Quantity of CDM groups without data (Number of CDM group(s) without data) mapping | DMRS port (DMRS port(s)) | Quantity of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, and 6 | 2 |
| 2 | 1 | 0 and 1 | 1 | 2 | 2 | 0, 1, 2, 3, 4, 5, and 6 | 2 |
| 3 | 2 | 0 | 1 | 3 | 2 | 0, 1, 2, 3, 4, 5, 6, and 7 | 2 |
| 4 | 2 | 1 | 1 | 4 to 31 | Reserved (Reserved) | Reserved (Reserved) | Reserved (Reserved) |
| 5 | 2 | 2 | 1 | | | | |
| 6 | 2 | 3 | 1 | | | | |
| 7 | 2 | 0 and 1 | 1 | | | | |
| 8 | 2 | 2 and 3 | 1 | | | | |
| 9 | 2 | 0-2 | 1 | | | | |
| 10 | 2 | 0-3 | 1 | | | | |
| 11 | 2 | 0 and 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0 and 1 | 2 | | | | |
| 21 | 2 | 2 and 3 | 2 | | | | |
| 22 | 2 | 4 and 5 | 2 | | | | |
| 23 | 2 | 6 and 7 | 2 | | | | |
| 24 | 2 | 0 and 4 | 2 | | | | |
| 25 | 2 | 2 and 6 | 2 | | | | |
| 26 | 2 | 0, 1, and 4 | 2 | | | | |
| 27 | 2 | 2, 3, and 6 | 2 | | | | |
| 28 | 2 | 0, 1, 4, and 5 | 2 | | | | |
| 29 | 2 | 2, 3, 6, and 7 | 2 | | | | |

(continued)

| One codeword (one codeword) Codeword 0 enabled (codeword 0 enable) Code word 1 disabled (codeword 1 disable) | | | | Two codewords (one codeword) Codeword 0 enabled (codeword 0 enable) Codeword 1 enabled (codeword 1 enable) | | | |
|---|---|---|---|---|---|---|---|
| Value (Value) | Quantity of CDM groups without data (Number of CDM group(s) without data) mapping | DMRS port (DMRS port(s)) | Quantity of front-load symbols (Number of front-load symbols) | Value (Value) | Quantity of CDM groups without data (Number of CDM group(s) without data) mapping | DMRS port (DMRS port(s)) | Quantity of front-load symbols (Number of front-load symbols) |
| 30 | 2 | 0, 2, 4, and 6 | 2 | | | | |
| 31 | Reserved (Reserved) | Reserved (Reserved) | Reserved (Reserved) | | | | |

For example, it is assumed that a value (value) of the antenna port field in the DCI is a decimal value corresponding to a bit status of the antenna port field. For example, when the value of the antenna port field is 3, and the quantity of DMRS ports (that is, a rank) is 8, the terminal device may determine, based on the antenna port field, that DMRS port numbers (indexes) indicated by the network device are respectively 0, 1, 2, 3, 4, 5, 6, and 7, in other words, data streams corresponding to the terminal device are eight streams.

It is assumed that DMRS port numbers corresponding to data streams included in the second group of data streams received by the 2nd sub-receiver are 4, 5, 6, and 7, and DMRS port numbers corresponding to data streams included in a first group of data streams received by a 1st sub-receiver are 0, 1, 2, and 3. In this case, the network device may use indication information of an 8-bit length, in other words, the length of the indication information is the same as the quantity of DMRS ports indicated by the antenna port field in the DCI, and each bit of the indication information of the 8-bit length corresponds to one DMRS port. For example, a 1st bit corresponds to a DMRS port 0, a 2nd bit corresponds to a DMRS port 1, a 3rd bit corresponds to a DMRS port 2, ..., and an 8th bit corresponds to a DMRS port 7. In other words, a DMRS port indicated by a Tth bit in the indication information of the 8-bit length is a Tth DMRS port indicated by the antenna port field in the DCI. For example, the DMRS port numbers (indexes) indicated by the antenna port field in the DCI are respectively 0, 1, 2, 3, 4, 5, 6, and 7. In this case, a DMRS port indicated by the 3rd bit in the indication information of the 8-bit length is a 3rd DMRS port indicated by the antenna port field in the DCI, that is, the DMRS port 2. A DMRS port indicated by the 8th bit in the indication information of the 8-bit length is the 8th DMRS port indicated by the antenna port field in the DCI, that is, the DMRS port 7.

For example, bit statuses on different bits of the indication information of the 8-bit length are respectively "000011111". It is assumed that a bit status "0" indicates that the power adjustment and the modulo operation do not need to be performed on a data stream corresponding to a DMRS port indicated by (or corresponding to) the bit, and a bit status "1" indicates that the power adjustment and the modulo operation need to be performed on a data stream corresponding to a DMRS port indicated by (or corresponding to) the bit. With reference to the foregoing example, DMRS port numbers corresponding to data streams received by the 1st sub-receiver are 0, 1, 2, and 3, DMRS port numbers corresponding to data streams received by the 2nd sub-receiver are 4, 5, 6, and 7, and bit statuses on different bits of the indication information of the 8-bit length are respectively "00001111". In this case, it may be determined that the power adjustment and the modulo operation need to be performed on the data streams corresponding to the DMRS port numbers 4, 5, 6, 7, and 8, in other words, the terminal device needs to perform the power adjustment and the modulo operation on the second group of data streams.

For another example, it is assumed that DMRS port numbers (indexes) indicated by the network device are respectively 0, 1, 2, 3, 4, 5, 6, and 7. DMRS port numbers corresponding to the data streams included in the second group of data streams are 0, 2, 4, and 7, and DMRS port numbers corresponding to the data streams included in the first group of data streams are 1, 3, 5, and 6. In this case, the network device may alternatively use the indication information of the 8-bit length, and each bit of the indication information of the 8-bit length corresponds to one DMRS port. Bit statuses on different bits of the indication information of the 8-bit length are respectively "10101001". It is assumed that a bit status "0" indicates that the power adjustment and the modulo operation do not need to be performed on a data stream corresponding to the DMRS port indicated by (or corresponding to) the bit, and a bit status "1" indicates that the power adjustment and the modulo operation need to be performed on a data stream corresponding to the DMRS port indicated by (or corresponding to) the bit. With reference to the foregoing example, the 1st bit corresponds to the DMRS port 0, and a bit status is 1, indicating that the power adjustment and the modulo operation need to be performed on a data stream corresponding to a DMRS port indicated by the bit. The $3^{rd}$ bit corresponds to the DMRS port 2, and a bit status is 1, indicating that the power adjustment and the modulo operation need to be performed on a data stream corresponding to a DMRS port indicated by the bit. The $5^{th}$ bit corresponds to the DMRS port 4, and a bit status is 1, indicating that the power adjustment and the modulo operation need to be performed on a data stream corresponding to a DMRS port indicated by the bit. The $8^{th}$ bit corresponds to the DMRS port 7, and a bit status is 1, indicating that the power adjustment and the modulo operation need to be performed on a data stream corresponding to a DMRS port indicated by the bit. In other words, it may be determined that the power adjustment and the modulo operation need to be performed on data streams corresponding to the DMRS port numbers 0, 2, 4, and 7 respectively, in other words, the terminal device needs to perform the power adjustment and the modulo operation on the second group of data streams.

For still another example, it is assumed that the value (value) of the antenna port field in the DCI is the decimal value corresponding to the bit status of the antenna port field. For example, when the value of the antenna port field is 2, and the quantity of DMRS ports (that is, the rank) is 6, the terminal device may determine, based on the antenna port field, that the DMRS port numbers (indexes) indicated by the network device are respectively 0, 1, 2, 3, 4, and 6. That is, the data streams corresponding to the terminal device are six streams. The DMRS port numbers corresponding to the data streams included in the second group of data streams are 0 and 1, and the DMRS port numbers corresponding to the data streams included in the first group of data streams are 2, 3, 4, and 6. In this case, the network device may alternatively use indication information of a 6-bit length, and each bit of the indication information of the 6-bit length corresponds to one DMRS port. Bit statuses on different bits of the indication information of the 6-bit length are respectively "110000". It is assumed that a bit status "0" indicates that the power adjustment and the modulo operation do not need to be performed on a data stream corresponding to a DMRS port indicated by (or corresponding to) the bit, and a bit status "1" indicates that the power adjustment and the modulo operation need to be performed on a data stream corresponding to a DMRS port indicated by (or corresponding to) the bit. In this manner, the terminal device may alternatively determine that the power adjustment and the modulo operation need to be performed on the data streams corresponding to the DMRS port numbers 0 and 1. In other words, the terminal device needs to perform the power adjustment and the modulo operation on the second group of data streams.

It should be understood that the foregoing example is merely an example. In another implementation of this application, for example, a bit status "0" may alternatively indicate that the power adjustment and the modulo operation need to be performed on a data stream corresponding to the DMRS port indicated by (or corresponding to) the bit. When a bit status "1" indicates that the power adjustment and the modulo operation do not need to be performed on a data stream corresponding to the DMRS port indicated by (or corresponding to) the bit. This is not limited herein in this embodiment of this application.

A DMRS port corresponding to a data stream on which the power adjustment and the modulo operation are performed is indicated to the terminal device, so that overheads needed for the indication information can be reduced, communication resource consumption can be reduced, and communication resource utilization can be improved.

In some other possible implementations, for a case in which the DMRS port corresponding to the data stream on which the power adjustment and the modulo operation is performed is indicated, the DMRS port corresponding to the data stream on which the power adjustment and the modulo operation need to be performed may be predefined or preconfigured. For example, assuming that a quantity of data streams (ranks) corresponding to the terminal device is L, the network device indicates L DMRS ports to the terminal device, and it may be predefined or preconfigured that the power adjustment and the modulo operation need to be performed on a data stream corresponding to a DMRS port that meets a preset condition in the L DMRS ports.

For example, for a case in which the terminal device includes two sub-receivers (that is, corresponding to two groups of data streams), it may be predefined or preconfigured that the power adjustment and the modulo operation need to be performed on data streams corresponding to first $\left\lfloor \dfrac{L}{2} \right\rfloor$ or last $\left\lfloor \dfrac{L}{2} \right\rfloor$ DMRS ports in the L DMRS ports, where $\left\lfloor \dfrac{L}{2} \right\rfloor$ represents rounding down a quotient of dividing L by 2. Alternatively, it may be predefined or preconfigured that the power adjustment and the modulo operation need to be performed on data streams corresponding to first $\left\lceil \dfrac{L}{2} \right\rceil$ or last

$\left\lceil \dfrac{L}{2} \right\rceil$ DMRS ports in the L DMRS ports, where $\left\lceil \dfrac{L}{2} \right\rceil$ represents rounding up a quotient of dividing L by 2. The data streams corresponding to the first $\left\lfloor \dfrac{L}{2} \right\rfloor$ DMRS ports belong to a same group of data streams, and the data streams corresponding to the last $\left\lfloor \dfrac{L}{2} \right\rfloor$ DMRS ports belong to a same group of data streams. Alternatively, the data streams corresponding to the first $\left\lceil \dfrac{L}{2} \right\rceil$ DMRS ports belong to a same group of data streams, and the data streams corresponding to the last $\left\lceil \dfrac{L}{2} \right\rceil$ DMRS ports belong to a same group of data streams.

Each sub-receiver is configured to receive one group of data streams. For example, it is assumed that the DMRS port numbers (indexes) indicated by the network device are respectively 0, 1, 2, 3, 4, 5, 6, and 7, in other words, L is equal to 8, and the DMRS port numbers corresponding to the data streams received by the $2^{nd}$ sub-receiver (that is, the data streams included in the second group of data streams) are 4, 5, 6, and 7. A predefined or preconfigured condition is that the power adjustment and the modulo operation need to be performed on the data streams corresponding to the last $\left\lfloor \dfrac{L}{2} \right\rfloor$ DMRS ports in the L DMRS ports. An $N^{th}$ DMRS port in the L DMRS ports is an $N^{th}$ DMRS port indicated by the antenna port field in the DCI. For example, the $3^{rd}$ DMRS port in the eight DMRS ports is the $3^{rd}$ DMRS port indicated by the antenna port field in the DCI, that is, the DMRS port 2. The last $\left\lfloor \dfrac{L}{2} \right\rfloor$ DMRS ports in the eight DMRS ports are respectively 4, 5, 6, and 7. In this manner, after determining the DMRS port numbers indicated by the network device, the terminal device may determine, based on the predefined or preconfigured condition, that the power adjustment and the modulo operation need to be performed on the data streams corresponding to the DMRS port numbers 4, 5, 6, 7, and 8, in other words, the $2^{nd}$ sub-receiver performs the power adjustment and the modulo operation on received data streams (the data streams included in the second group of data streams).

It should be understood that, in this embodiment of this application, the preset condition is not limited. For example, for a case in which the terminal device includes three sub-receivers, it may be predefined or preconfigured that the power adjustment and the modulo operation need to be performed on data streams corresponding to first $\left\lfloor \dfrac{L}{3} \right\rfloor$ or last $\left\lfloor \dfrac{L}{3} \right\rfloor$ DMRS ports in the L DMRS ports. The data streams corresponding to the first $\left\lfloor \dfrac{L}{3} \right\rfloor$ DMRS ports belong to a same group of data streams, the data streams corresponding to the last $\left\lfloor \dfrac{L}{3} \right\rfloor$ DMRS ports belong to a same group of data streams, and data streams corresponding to middle $\left\lfloor \dfrac{L}{3} \right\rfloor$ DMRS ports belong to a same group of data streams. Each sub-receiver is configured to receive one group of data streams. Alternatively, it may be predefined or preconfigured that the power adjustment and the modulo operation need to be performed on data streams corresponding to first

$$\left\lfloor \frac{L}{3} \right\rfloor \times 2$$

or last $\left\lfloor \frac{L}{3} \right\rfloor \times 2$ DMRS ports in the L DMRS ports, in other words, the power adjustment and the modulo operation need to be performed on two groups of data streams. Alternatively, the preset condition may be another condition or the like. This is not limited in this embodiment of this application.

It should be understood that, if a DMRS port corresponding to a data stream on which the power adjustment and the modulo operation are performed is predefined or preconfigured, in S420, the network device also needs to determine, based on the predefined or preconfigured condition from DMRS ports indicated to the terminal device, a DMRS port that meets the condition, to determine a data stream (or a group of data streams) corresponding to the DMRS port, and further perform the interference cancellation and the modulo operation on the data stream (or the group of data streams).

It should be understood that, in this embodiment of this application, on a network device side, for one group of data streams, the interference cancellation and the modulo operation are performed on all data streams included in the group of data streams, or the interference cancellation and the modulo operation are performed on no data streams included in the group of data streams. On a terminal device side, for one group of data streams, the power adjustment and the modulo operation need to be performed on all data streams included in the group of data streams, or the power adjustment and the modulo operation need to be performed on no data streams included in the group of data streams.

The DMRS port corresponding to the data stream on which the power adjustment and the modulo operation are performed is determined by using the predefined or preconfigured ("preconfigured" may also be referred to as "signaling-configured") condition, and the network device does not use additional signaling to indicate, to the terminal device, the data stream on which the power adjustment and the modulo operation need to be performed. This reduces signaling overheads needed by the indication information, reduces the communication resource consumption, and improves the communication resource utilization.

In this embodiment of this application, "predefined" may be understood as "predefined in a protocol", and "signaling-configured" may be understood as "configured using higher layer signaling or physical layer signaling". The higher layer signaling may include, for example, RRC signaling, MAC control element (control element, CE) signaling, and radio link control (radio link control, RLC) signaling. The physical layer signaling may include, for example, physical downlink control information (downlink control information, DCI), signaling communication through a downlink physical layer channel, and the like. A physical downlink channel may be, for example, a physical downlink control channel (physical downlink control channel, PDCCH) or a physical downlink shared channel (physical downlink shared channel, PDSCH).

In still another possible implementation, the terminal device may alternatively report, to the network device in advance, an antenna port group identifier corresponding to the sub-receiver. For example, the terminal device may report, to the network device, an identifier of an antenna port group corresponding to each sub-receiver. Optionally, the terminal device may further report, to the network device, an antenna port index included in the antenna port group. In this case, the network device may indicate, to the terminal device, an antenna port group identifier corresponding to a sub-receiver on which the power adjustment and the modulo operation are performed, to indicate, to the terminal device, that the sub-receiver performs the power adjustment and the modulo operation on a received data stream. One antenna port group is used to receive one group of data streams.

For example, with reference to the foregoing example, the terminal device uses a structure of eight receive antennas, and a receiver of the terminal device is equivalently split into two sub-receivers for MIMO transmission. A quantity of receive antennas of a 1st sub-receiver and a quantity of receive antennas of a 2nd sub-receiver are both 4. In this case, the terminal device may report to the network device that the 1st sub-receiver corresponds to an antenna port group 1, corresponding antenna port indexes are 0 to 3, and the 1st sub-receiver is configured to receive a first group of data streams. A 2nd sub-receiver corresponds to an antenna port group 2, corresponding antenna port indexes are 4 to 7, and the 2nd sub-receiver is configured to receive a second group of data streams. When the terminal device reports, to the network device, an identifier of an antenna port group corresponding to each sub-receiver and an antenna port index included in the antenna port group, the network device may determine, based on information reported by the terminal device, that the interference cancellation and the modulo operation are performed on a data stream corresponding to an antenna port on which sub-receiver. For example, assuming that the network device performs the interference cancellation and the modulo operation on data streams corresponding to antenna ports whose antenna port indexes are 4 to 7, the network device may indicate, to the terminal device, that the sub-receiver on which the power adjustment and the modulo operation are performed corresponds to the antenna port group 2, and corresponding antenna port indexes are 4 to 7. After receiving the indication, the terminal device may determine that the power adjustment and the modulo operation need to be performed on the received second group of data streams of the 2nd sub-receiver.

An identifier of an antenna port group corresponding to a sub-receiver (or a group of data streams) on which the power adjustment and the modulo operation are performed is indicated to the terminal device, so that signaling overheads for indicating, by the network device, a data stream on which the power adjustment and the modulo operation need to be performed can be reduced, the communication resource consumption can be reduced, and the communication resource utilization can be improved.

It should be further understood that, in addition to the foregoing several manners, the network device may indicate, to the terminal device in another manner, the group of data streams on which the power adjustment and the modulo operation need to be performed. For example, the network device may indicate, to the terminal device, an identifier of the data stream on which the power adjustment and the modulo operation need to be performed or an identifier of the group data stream. This is not limited in this embodiment of this application.

For a case in which the network device indicates a power adjustment parameter to the terminal device, in a possible implementation, the network device may send indication information to the terminal device, where the indication information indicates a power difference between an equivalent channel of the second group of data streams and an equivalent channel corresponding to a DMRS received by the 2nd sub-receiver. For example, the power difference may be $\dfrac{1}{\beta}$.

In another possible implementation, the network device may send indication information to the terminal device, where the indication information indicates a power difference factor between an equivalent channel of the second group of data streams and an equivalent channel corresponding to a DMRS.

For example, the power difference factor $\gamma_{PDSCH}^{DMRS}$ may be determined according to a formula (24):

$$\gamma_{PDSCH}^{DMRS} = 10^{-\frac{\beta_{DMRS} \cdot \beta_{THP}}{20}} \quad (24)$$

In the formula (24), $\beta_{THP}$ represents a power difference $\dfrac{1}{\beta^2}$ between a THP-precoded data channel and the DMRS, and $\beta_{DMRS}$ represents a power boosting (power boosting) factor corresponding to the DMRS. A power boosting value corresponding to the DMRS is related to a value of the quantity of CDM groups without data (Number of DMRS CDM group(s) without data) mapping in Table 1.

For example, the network device may send indication information to the terminal device, where the indication information includes a value of the power difference factor $\gamma_{PDSCH}^{DMRS}$.

S620: After receiving a plurality of groups of data streams (that is, the first group of data streams and the second group of data streams), the terminal device determines a data signal vector corresponding to each group of data streams. In other words, after receiving a data signal obtained through non-linear precoding processing, the terminal device determines a data signal vector corresponding to the data signal.

After the terminal device receives the data signal, assuming that a data signal vector of the first group of data streams received by the 1st sub-receiver is $y_1$, and a data signal vector of the second group of data streams received by the 1st sub-receiver is $y_2$, $y_1$ and $y_2$ may be determined according to a formula (25):

$$
\begin{aligned}
\begin{pmatrix} \mathbf{y_1} \\ \mathbf{y_2} \end{pmatrix} &= P \begin{pmatrix} H_1 \\ H_2 \end{pmatrix} \begin{pmatrix} F_1 & \dfrac{1}{\beta} F_2 \end{pmatrix} \begin{pmatrix} \mathbf{x_1} \\ \mathbf{x_2} \end{pmatrix} + \begin{pmatrix} \mathbf{n_1} \\ \mathbf{n_2} \end{pmatrix} \\
&= P \begin{pmatrix} H_1 \\ H_2 \end{pmatrix} \begin{pmatrix} V_1^{(1)} & \dfrac{1}{\beta} V_1^{(0)} \widetilde{V}_2^{(1)} \end{pmatrix} B^{-1} \begin{pmatrix} \mathbf{s_1} \\ \mathbf{v_2} \end{pmatrix} + \begin{pmatrix} \mathbf{n_1} \\ \mathbf{n_2} \end{pmatrix} \\
&= P \begin{pmatrix} H_1 V_1^{(1)} & 0 \\ 0 & \dfrac{1}{\beta} H_2 V_1^{(0)} \widetilde{V}_2^{(1)} \end{pmatrix} B B^{-1} \begin{pmatrix} \mathbf{s_1} \\ \mathbf{v_2} \end{pmatrix} + \begin{pmatrix} \mathbf{n_1} \\ \mathbf{n_2} \end{pmatrix} \quad (25) \\
&= P \begin{pmatrix} H_1 V_1^{(1)} & 0 \\ 0 & \dfrac{1}{\beta} H_2 V_1^{(0)} \widetilde{V}_2^{(1)} \end{pmatrix} \begin{pmatrix} \mathbf{s_1} \\ \mathbf{v_2} \end{pmatrix} + \begin{pmatrix} \mathbf{n_1} \\ \mathbf{n_2} \end{pmatrix}
\end{aligned}
$$

In the formula (25), $n_1$ represents a noise vector corresponding to the 1st sub-receiver, $n_2$ represents a noise vector corresponding to the 2nd sub-receiver, and meanings represented by other letters are the same as the meanings represented by the same letters in the foregoing.

$$\begin{pmatrix} H_1 V_1^{(1)} & 0 \\ 0 & \frac{1}{\beta} H_2 V_1^{(0)} \widetilde{V}_2^{(1)} \end{pmatrix}$$

It can be learned from the formula (25) that an equivalent channel matrix is , and is a block triangular matrix. This means that interference between sub-receivers (that is, between groups of data streams) is canceled.

For the 1st sub-receiver, the data signal vector of the first group of data streams received by the 1st sub-receiver may be determined according to a formula (26):

$$\mathbf{y}_1 = PH_1 V_1^{(1)} \mathbf{s}_1 + \mathbf{n}_1 \quad (26)$$

In the formula (26), $n_1$ represents the noise vector corresponding to the 1st sub-receiver, and meanings represented by other letters are the same as the meanings represented by the same letters in the foregoing.

For the 2nd sub-receiver, the data signal vector $y_2$ of the second group of data streams received by the 2nd sub-receiver may be determined according to a formula (27):

$$\mathbf{y}_2 = P \frac{1}{\beta} H_2 V_1^{(0)} \widetilde{V}_2^{(1)} \mathbf{s}_2 + \mathbf{n}_2 \quad (27)$$

In the formula (27), $n_2$ represents the noise vector corresponding to the 2nd sub-receiver, and meanings represented by other letters are the same as the meanings represented by the same letters in the foregoing.

S630: After receiving the DMRS, the terminal device determines, based on the DMRS, equivalent channel matrices respectively corresponding to the first group of data streams and the second group of data streams.

After the terminal device receives the DMRS, assuming that a DMRS vector received by the 1st sub-receiver is $d_1$, and a DMRS vector received by the 1st sub-receiver is $d_2$, $d_1$ and $d_2$ may be determined according to a formula (28):

$$\begin{aligned} \begin{pmatrix} d_1 \\ d_2 \end{pmatrix} &= P \begin{pmatrix} H_1 \\ H_2 \end{pmatrix} \begin{pmatrix} F_1 & F_2 \end{pmatrix} \begin{pmatrix} \mathrm{p}_1 \\ \mathrm{p}_2 \end{pmatrix} + \begin{pmatrix} \mathrm{n}_1 \\ \mathrm{n}_2 \end{pmatrix} \\ &= P \begin{pmatrix} H_1 \\ H_2 \end{pmatrix} \begin{pmatrix} V_1^{(1)} & V_1^{(0)} \widetilde{V}_2^{(1)} \end{pmatrix} \begin{pmatrix} \mathrm{p}_1 \\ \mathrm{p}_2 \end{pmatrix} + \begin{pmatrix} \mathrm{n}_1 \\ \mathrm{n}_2 \end{pmatrix} \end{aligned} \quad (28)$$

Meanings represented by letters in the formula (28) are the same as the meanings represented by the same letters in the foregoing.

For the 1st sub-receiver, an equivalent channel matrix corresponding to the DMRS received by the 1st sub-receiver may be determined according to a formula (29):

$$\widetilde{H}_1 = H_1 V_1^{(1)} + \Delta_1 \quad (29)$$

In the formula (29), $\tilde{H}_1$ represents an equivalent channel matrix corresponding to the DMRS received by the 1st sub-receiver, that is, an equivalent channel matrix corresponding to the first group of data streams. $\Delta_1$ represents a channel estimation error, and meanings represented by other letters in the formula (29) are the same as the meanings represented by the same letters in the foregoing.

For the 2nd sub-receiver, an equivalent channel matrix corresponding to the DMRS received by the 2nd sub-receiver may be determined according to a formula (30):

$$\widetilde{H}_2 = H_2 V_1^{(0)} \widetilde{V}_2^{(1)} + \Delta_2 \quad (30)$$

In the formula (30), $\tilde{H}_2$ represents an equivalent channel matrix corresponding to the DMRS received by the 2nd sub-receiver, that is, an equivalent channel matrix corresponding to the second group of data streams. $\Delta_2$ represents a channel estimation error, and meanings represented by other letters in the formula (30) are the same as the meanings represented by the same letters in the foregoing.

S640: The terminal device separately detects, based on the equivalent channel matrices respectively corresponding to the first group of data streams and the second group of data streams and the indication information, data signal vectors corresponding to the first group of data streams and the second group of data streams.

After the terminal device determines the equivalent channel matrix corresponding to the DMRS, for the first group of data streams, the terminal device detects the data signal vector $\mathbf{y}_1$ by using $\tilde{H}_1$, to restore a data signal corresponding to the data signal vector $\mathbf{y}_1$, in other words, obtain the first group of data streams corresponding to the 1st sub-receiver.

For the second group of data streams, the terminal device detects the data signal vector $\mathbf{y}_2$ by using $\tilde{H}_2$ and the power adjustment parameter $\dfrac{1}{\beta}$ of which the network device notifies the terminal device, to restore a data signal corresponding to the data signal vector $y_2$. After the data signal corresponding to the data signal vector $\mathbf{y}_2$ is restored, the modulo operation needs to be performed on the data signal $\mathbf{y}_2$ based on the indication information of the network device. After the modulo operation is performed, a final data signal is obtained, in other words, the second group of data streams corresponding to the 2nd sub-receiver is obtained.

According to the data transmission method provided in this application, the network device notifies the terminal device of information about a group of data streams on which the power adjustment and the modulo operation need to be performed. This can avoid a case in which the terminal device performs the power adjustment and the modulo operation on all groups of data streams, to effectively reduce processing complexity of the terminal device. Further, the terminal device is notified of a power adjustment parameter used during the power adjustment, so that it can be ensured that after being adjusted by using the power adjustment parameter, the equivalent channel corresponding to the DMRS can match an equivalent channel actually experienced by a data channel, to ensure accuracy of detecting the group of data by the terminal device.

Further, in a process of performing THP on a data stream, the network device designs an interference cancellation matrix as a block triangular matrix. The interference cancellation and the modulo operation on all data streams are replaced with the interference cancellation and the modulo operation between groups of data streams by using the block triangular matrix. This reduces a quantity of data streams on which the interference cancellation and the modulo operation need to be performed, to reduce a calculation amount of the network device, effectively reduce complexity of a precoding process of the network device, and reduce resource consumption.

In the foregoing example, an example in which one terminal device includes two sub-receivers, in other words, one terminal device is configured to receive two groups of data streams is used for description. In another embodiment of this application, one terminal device may further include more (for example, three or four) sub-receivers, and each sub-receiver is configured to receive one group of data streams. In other words, one terminal device may be further configured to receive more groups of data streams. In this case, a network device may perform interference cancellation and a modulo operation on a part of groups of data streams in a plurality of groups of data streams. After the foregoing processing, the network device may send, to the terminal device, a part of groups of data streams on which the interference cancellation and the modulo operation are performed and a group of data streams on which no interference cancellation and modulo operation are performed, to reduce a calculation amount of the network device, effectively reduce complexity of the precoding process of the network device, and reduce resource consumption. In addition, the network device may further send, to the terminal device, information about the groups of data streams on which the interference cancellation and the modulo operation are performed, so that the terminal device performs power adjustment and the modulo operation on these groups of data streams. In addition, the terminal device is notified of a power adjustment parameter used during the power adjustment, so that accuracy of data detection performed by the terminal device can be ensured.

In some possible implementations, in the plurality of groups of data streams, each group of data streams may include a same quantity of data streams.

For example, it is assumed that one terminal device includes M sub-receivers, and each sub-receiver is configured to receive one group of data streams. In other words, one terminal device is configured to receive M groups of data streams. In this case, the network device may perform the interference cancellation and the modulo operation on N groups of data streams in the M groups of data streams by using a block triangular matrix B shown in the following formula (31), where N is an integer less than M.

$$B = \begin{pmatrix} I & 0 & & 0 & 0 \\ B_{21} & I & & 0 & 0 \\ \vdots & & \ddots & \vdots & \vdots \\ B_{(M-1)1} & \cdots & & I & 0 \\ B_{M1} & \cdots & B_{M(M-1)} & & I \end{pmatrix} \quad (31)$$

In the formula (31), I represents a unit matrix, and $B_{xy}$ represents an interference cancellation submatrix associated with a $y^{th}$ group of data streams when the interference cancellation and the modulo operation are performed on an $x^{th}$ group of data streams, where a value range of x is 2 to M, and a value range of y is 1 to x-1.

For a $k^{th}$ group of data streams in the N groups of data streams, the interference cancellation and the modulo operation may be performed on the $k^{th}$ group of data streams by using a formula (32):

$$x_k = mod\langle s_k - \sum_{j=1}^{k-1} B_{kj}x_j\rangle \quad (32)$$

In the formula (32), $s_k$ represents a transmit symbol vector corresponding to the $k^{th}$ group of data streams, and $x_k$ represents a transmit vector obtained by performing the THP interference cancellation and modulo operation on the $k^{th}$ group of data streams.

For example, if a value of M is 4, a value of N may be 3, 2, or 1.

In some implementations, when M=4 and N=3, the block triangular matrix B may be determined by using a formula (33):

$$B = \begin{pmatrix} I & 0 & 0 & 0 \\ B_{21} & I & 0 & 0 \\ B_{31} & B_{32} & I & 0 \\ B_{41} & B_{42} & B_{43} & I \end{pmatrix} \quad (33)$$

The matrix B in the formula (33) represents that in four groups of data streams, the interference cancellation and the modulo operation are performed on $2^{nd}$, $3^{rd}$, and $4^{th}$ groups of data streams.

In some implementations, when M=4 and N=2, the block triangular matrix B may be determined by using a formula (34):

$$B = \begin{pmatrix} I & 0 & 0 & 0 \\ 0 & I & 0 & 0 \\ B_{31} & B_{32} & I & 0 \\ B_{41} & B_{42} & B_{43} & I \end{pmatrix} \quad (34)$$

The matrix B in the formula (34) represents that in four groups of data streams, the interference cancellation and the modulo operation need to be performed on $3^{rd}$ and $4^{th}$ groups of data streams.

In some implementations, when M=4 and N=1, the matrix B may be determined by using a formula (35):

$$B = \begin{pmatrix} I & 0 & 0 & 0 \\ 0 & I & 0 & 0 \\ 0 & 0 & I & 0 \\ B_{41} & B_{42} & B_{43} & I \end{pmatrix} \quad (35)$$

The matrix B in the formula (35) represents that in four groups of data streams, the interference cancellation and the modulo operation need to be performed on a $4^{th}$ group of data streams.

The network device may perform the interference cancellation and the modulo operation on the part of groups of data streams in the plurality of groups of data streams by using the foregoing block triangular matrix B, to reduce the calculation amount of the network device, effectively reduce the complexity of the precoding process performed by the network device, and reduce the resource consumption. In addition, the network device may send indication information to the terminal device, where the indication information indicates that the terminal device performs the power adjustment and the modulo operation on the N groups of data streams in the M groups of data streams. A specific manner of the indication information may be the same as the manner in the method 400. For example, DMRS port numbers corresponding to data streams included in the N groups of data, an identifier of an antenna port group corresponding to each of the N groups of data streams, and the like may be indicated. Further, the network device may further notify the terminal device of a power difference between an equivalent channel of each group of data streams in the N groups of data streams and an equivalent channel corresponding to the DMRS, to ensure accuracy of detecting the N groups of data streams by the terminal device.

In some possible implementations, in the M groups of data streams, each group of data streams may include a same quantity of data streams. For example, each group of data streams includes eight or four data streams.

It should be further understood that, in some other implementations of this application, when one terminal device corresponds to one receiver, and the receiver corresponds to all receive antennas of the terminal device, and detects all data streams received by the terminal device, in other words, when one terminal device corresponds to (configured to receive) one group of data streams, and there are a plurality of terminal devices, the network device may perform the interference cancellation and the modulo operation on the part of groups of data streams in the plurality of groups of data streams by using the block triangular matrix B shown in the following formula (36):

$$B = \begin{pmatrix} I & 0 & & 0 & 0 \\ B_{21} & I & & 0 & 0 \\ \vdots & & \ddots & \vdots & \vdots \\ B_{(M-1)1} & \cdots & & I & 0 \\ B_{M1} & \cdots & B_{M(M-1)} & & I \end{pmatrix} (36)$$

For a group of data streams corresponding to a $k^{th}$ terminal device, or for a $k^{th}$ group of data streams in the part of groups of data streams, the interference cancellation and the modulo operation may be performed on the $k^{th}$ group of data streams by using a formula (37):

$$x_k = mod\langle s_k - \sum_{j=1}^{k-1} B_{kj} x_j \rangle \quad (37)$$

In the formula (37), $s_k$ represents a transmit symbol vector corresponding to a group of data stream received by the $k^{th}$ terminal device, and $x_k$ represents a transmit vector obtained by performing the THP interference cancellation and modulo operation on the group data stream received by the $k^{th}$ terminal device.

The network device may perform, by using the foregoing block triangular matrix B, the interference cancellation and the modulo operation only on groups of data streams corresponding to a part of terminal devices in the plurality of terminal devices, in other words, perform the interference cancellation and the modulo operation on the part of groups of data streams in the plurality of groups of data streams. After the foregoing processing, the network device may separately send one group of data streams to the plurality of terminal devices, to reduce the calculation amount of the network device and effectively reduce the complexity of the precoding process performed by the network device. In addition, the network device may separately send the indication information to the part of terminal devices, so that the terminal device that receives the indication information performs the power adjustment and the modulo operation on a received group of data streams. In addition, the terminal devices are separately notified of a power adjustment parameter used during the power adjustment, so that the accuracy of the data detection performed by the terminal device can be ensured.

In some possible implementations, in the part of groups of data streams, each group of data streams may include a same quantity of data streams. For example, each group of data streams includes eight or four data streams.

It should be further understood that, in some other implementations of this application, when one terminal device includes a plurality of sub-receivers and there are a plurality of terminal devices, that is, when one terminal device is configured to receive a plurality of groups of data streams, and there are a plurality of terminal devices, the network device may alternatively perform, by using a block triangular matrix, the interference cancellation and the modulo operation only on the groups of data streams corresponding to a part of terminal devices in the plurality of terminal devices, to reduce the calculation amount of the network device and effectively reduce the complexity of the precoding process performed by the network device.

For example, there are three terminal devices, and each terminal device corresponds to two groups of data streams. The block triangular matrix B may be determined by using a formula (38):

$$B = \begin{pmatrix} I & 0 & 0 & 0 & 0 & 0 \\ B_{21}^{(1)} & I & 0 & 0 & 0 & 0 \\ B_{11}^{(2)} & B_{12}^{(2)} & I & 0 & 0 & 0 \\ B_{21}^{(2)} & B_{22}^{(2)} & B_{23}^{(2)} & I & 0 & 0 \\ B_{11}^{(3)} & B_{12}^{(3)} & B_{13}^{(3)} & B_{14}^{(3)} & I & 0 \\ B_{21}^{(3)} & B_{22}^{(3)} & B_{23}^{(3)} & B_{24}^{(3)} & B_{25}^{(3)} & I \end{pmatrix} (38)$$

In the formula (38), $B_{mn}^{(k)}$ represents an interference cancellation submatrix associated with an $m^{th}$ group of data streams (m=1, 2) of a $k^{th}$ terminal device (k=1, 2, 3) and an $n^{th}$ MU-MIMO group of data streams (n=2(k-1)+m-1).

For the $m^{th}$ group of data streams corresponding to the $k^{th}$ terminal device, the interference cancellation and the modulo operation may be performed on the m<sup>th</sup> group of data streams by using a formula (39):

$$x_m^{(k)} = mod\langle s_m^{(k)} - \sum_{n=1}^{N(k-1)+m-1} B_{mn}^{(k)} x_n^{(k)} \rangle \quad (39)$$

In the formula (39), $s_m^{(k)}$ represents a transmit symbol vector corresponding to the m<sup>th</sup> group of data streams of the k<sup>th</sup> terminal device, $x_m^{(k)}$ represents a transmit vector obtained by performing the THP interference cancellation and modulo operation on the m<sup>th</sup> group of data streams of the k<sup>th</sup> terminal device, and $x_n^{(k)}$ represents a transmit vector obtained by performing the THP interference cancellation and modulo operation on the n<sup>th</sup> group of data streams of the k<sup>th</sup> terminal device.

For a terminal device whose group of data streams are subject to the interference cancellation and the modulo operation, because one terminal device corresponds to a plurality of groups of data streams, the network device may perform the interference cancellation and the modulo operation on a part of groups or all groups of data streams in the plurality of groups of data streams of the terminal device. For a terminal device whose group of data streams are not subject to the interference cancellation and the modulo operation, because one terminal device corresponds to a plurality of groups of data streams, the network device may perform the interference cancellation and the modulo operation on no groups of data streams in the plurality of groups of the terminal device.

In addition, the network device may separately send the indication information to the part of terminal devices, so that a terminal device that receives the indication information performs the power adjustment and the modulo operation on a detected group of data streams. In addition, the terminal devices are separately notified of the power adjustment parameter used during the power adjustment, so that the accuracy of data detection performed by the terminal device can be ensured.

In a process in which the network device sends the indication information to any one of the part of terminal devices, the terminal device may be indicated to perform the power adjustment and the modulo operation on a part of groups or all groups of data streams in a plurality of received groups of data streams, and the terminal device is notified of the power adjustment parameter used during the power adjustment, so that the accuracy of data detection performed by the terminal device can be ensured.

For example, it is assumed that there are three terminal devices, and each terminal device includes three sub-receivers, in other words, each terminal device corresponds to three groups of data streams. The network device may perform the interference cancellation and the modulo operation on a group of data streams corresponding to one or two terminal devices in the three terminal devices. For the terminal device whose group of data streams are subject to the interference cancellation and the modulo operation, the network device may perform the interference cancellation and the modulo operation on three groups, two groups, or one group of data streams in the three groups of data streams of the terminal device. For (one or two) terminal devices whose group of data streams are not subject to the interference cancellation and the modulo operation, the interference cancellation and the modulo operation may not be performed on the three groups of data streams of the terminal device.

When the network device sends the indication information to the terminal device whose group of data streams are subject to the interference cancellation and the modulo operation, for any terminal device, the foregoing manner of "indicating a DMRS port number corresponding to a data stream included in a group of data streams on which the power adjustment and the modulo operation are performed" may be used to indicate, to the terminal device, a specific group of data streams on which the power adjustment and the modulo operation need to be performed, and notify the terminal device of a power adjustment parameter corresponding to each group of data streams, to ensure the accuracy of data detection performed by the terminal device.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, or some steps may be newly added. Alternatively, any two or more of the foregoing embodiments are combined. A modified, changed, or combined solution also falls within the scope of embodiments of this application.

It should be further understood that division of various manners, cases, categories, and embodiments in embodiments of this application is merely intended for ease of description, and should not constitute a particular limitation. The features in the various manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of the embodiments of this application emphasize differences between the embodiments. For same or similar parts that are not mentioned, refer to the embodiments. For brevity, details are not described herein again.

It should be further understood that in embodiments of this application, "predefining" or "presetting" may be implemented by pre-storing corresponding code, a table, or another manner that may indicate related information in a device (for example, a network device or a terminal device). A specific implementation of this application is not limited in this application.

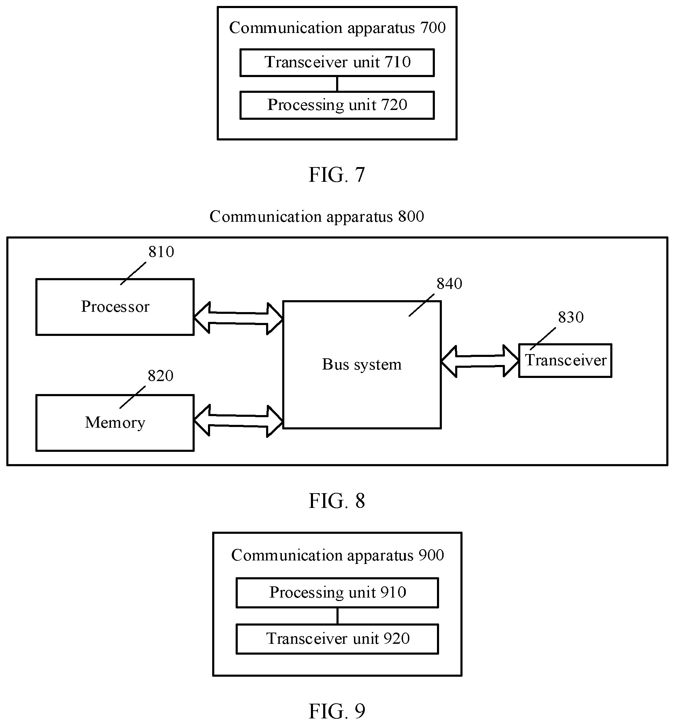

The foregoing describes in detail the methods in embodiments of this application with reference to FIG. 1 to FIG. 6. The following describes in detail the communication apparatuses in embodiments of this application with reference to FIG. 7 to FIG. 12.

In embodiments, a terminal device and a network device may be divided into functional modules based on the foregoing method. For example, each functional module may be obtained through division based on each corresponding function, or two or more functions may be integrated into one processing module. The integrated module may be implemented in a form of hardware. It should be noted that division into the modules in embodiments is an example, and is merely logical function division. In actual implementation, there may be another division manner.

It should be noted that related content of the steps in the foregoing method embodiments may be referenced to function descriptions of corresponding functional modules, and details are not described herein again.

The terminal device and the network device provided in embodiments of this application are configured to perform any data transmission method provided in the foregoing method embodiments. Therefore, effects that are the same as those of the foregoing implementation method can be achieved. When an integrated unit is used, the terminal device or the network device may include a processing module, and an optional storage module and communication module. The processing module may be configured to: control and manage an action of the terminal device or the network device. For example, the processing unit may be configured to support the terminal device or the network device in performing a step performed by the processing unit. The storage module may be configured to support storage of program code, data, and the like. The communication module may be configured to support the terminal device or the network device in communicating with another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, like a radio frequency circuit, a Bluetooth chip, or a Wi-Fi chip.

For example, FIG. 7 is a block diagram of a communication apparatus 700 according to an embodiment of this application. The communication apparatus 700 may correspond to the terminal device described in the method 400 and/or the method 600, or may be a chip or a component used in the terminal device. In addition, modules or units in the communication apparatus 700 are respectively configured to perform actions or processing processes performed by the terminal device in any one of the method 400 and/or the method 600.

As shown in FIG. 7, the communication apparatus 700 includes a transceiver unit 710 and a processing unit 720. The transceiver unit 710 is configured to perform specific signal receiving and sending under control of the processing unit 720.

The transceiver unit 710 is configured to receive one group of data streams or a plurality of groups of data streams, where each group of data streams includes a plurality of data streams. The transceiver unit 710 is further configured to receive indication information, where the indication information indicates to perform power adjustment and a modulo operation on one group of received data streams, or the indication information indicates to perform power adjustment and a modulo operation on a part of groups of data streams in the plurality of groups of data streams. The processing unit 720 is configured to perform, based on the indication information, the power adjustment and the modulo operation on the received group of data streams, or perform the power adjustment and the modulo operation on a part of groups of data streams in a plurality of received groups of data streams.

The communication apparatus provided in this application receives information about a group of data streams on which the power adjustment and the modulo operation need to be performed. This can avoid a case in which the communication apparatus performs the power adjustment and the modulo operation on all groups of data streams, to effectively reduce processing complexity of the communication apparatus.

In some possible implementations, when the communication apparatus receives one group of data streams, the indication information further indicates a power difference between an equivalent channel of one group of data streams corresponding to the communication apparatus and an equivalent channel corresponding to a DMRS. In this implementation, a power adjustment parameter used during the power adjustment is received, so that it can be ensured that after being adjusted by using the power adjustment parameter, the equivalent channel corresponding to the DMRS can match an equivalent channel actually experienced by a data channel, to ensure accuracy of detecting a group of data by the communication apparatus.

In some possible implementations, when the communication apparatus receives a plurality of groups of data streams, the indication information includes DMRS port numbers corresponding to data streams included in the part of groups of data streams.

In some possible implementations, the indication information includes a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams.

In some possible implementations, the indication information includes an identifier of an antenna port group corresponding to the part of groups of data streams.

In some possible implementations, a DMRS port number corresponding to a data stream on which the power adjustment and the modulo operation are performed in the plurality of groups of data streams is predefined or preconfigured.

In some possible implementations, the indication information further indicates a power difference between an equivalent channel of each group of data streams in the part of groups of data streams and an equivalent channel corresponding to a DMRS.

In some possible implementations, the transceiver unit 710 is further configured to receive two groups of data streams, where the indication information indicates to perform the power adjustment and the modulo operation on one group of data streams in the two groups of data streams.

In some possible implementations, each group of data streams in the plurality of groups of data streams includes a same quantity of data streams.

Further, the communication apparatus 700 may further include a storage unit. The transceiver unit 710 may be a transceiver, an input/output interface, or an interface circuit. The storage unit is configured to store instructions executed by the transceiver unit 710 and the processing unit 720. The transceiver unit 710, the processing unit 720, and the storage unit are coupled to each other. The storage unit stores instructions. The processing unit 720 is configured to execute the instructions stored in the storage unit. The transceiver unit 710 is configured to perform the specific signal receiving and sending under the control of the processing unit 720.

It should be understood that, for a specific process in which the units in the communication apparatus 700 perform the foregoing corresponding steps, refer to the foregoing descriptions related to the terminal device with reference to the related embodiment in the method 400 and/or the method 600. For brevity, details are not described herein again.

It should be understood that, the transceiver unit 710 may be a transceiver, an input/output interface, or an interface circuit. The storage unit may be a memory. The processing unit 720 may be implemented by a processor.

As shown in FIG. 8, the communication apparatus 800 may include a processor 810, a memory 820, a transceiver 830, and a bus system 840. Components in the communication apparatus 800 are coupled together through the bus system 840. Besides including a data bus, the bus system 840 may further include a power bus, a control bus, a status signal bus, and the like. However, for clear description, various buses are marked as the bus system 840 in the FIG. 8. For ease of representation, FIG. 8 shows only an example.

The communication apparatus 700 shown in FIG. 7 or the communication apparatus 800 shown in FIG. 8 can implement the steps performed by the terminal device in the method 400 and/or the method 600. For similar descriptions, refer to the descriptions in the foregoing corresponding methods. To avoid repetition, details are not described herein again.

It should be further understood that the communication apparatus 700 shown in FIG. 7 or the communication apparatus 800 shown in FIG. 8 may be a terminal device, or a terminal device may include the communication apparatus 700 shown in FIG. 7 or the communication apparatus 800 shown in FIG. 8.

FIG. 9 is a block diagram of a communication apparatus 900 according to an embodiment of this application. The communication apparatus 900 may correspond to the network device described in the method 400 and/or the method 600, or may be a chip or a component used in the network device. In addition, modules or units in the communication apparatus 900 are respectively configured to perform actions or processing processes performed by any network device in the method 400 and/or the method 600.

As shown in FIG. 9, the apparatus 900 may include a processing unit 910 and a transceiver unit 920. The transceiver unit 920 is configured to perform specific signal receiving and sending under control of the processing unit 910.

The processing unit 910 is configured to separately perform, by using a first matrix, interference cancellation and a modulo operation on a part of groups of data streams in a plurality of groups of data streams, where each group of data streams includes a plurality of data streams, different groups of data streams correspond to different channel matrices, the first matrix is determined based on channel matrices respectively corresponding to the plurality of groups of data streams, and the first matrix is a block triangular matrix.

The processing unit 910 is further configured to perform, by using a second matrix, non-linear precoding on a group of data streams on which power adjustment and the modulo operation are performed and a group of data streams on which the power adjustment and the modulo operation are not performed, where the second matrix is determined based on the channel matrices respectively corresponding to the plurality of groups of data streams.

The transceiver unit 920 is configured to send a plurality of groups of non-linearly precoded data streams, where each group of data streams includes a plurality of data streams.

The transceiver unit 920 is further configured to send indication information, where the indication information indicates to perform the power adjustment and the modulo operation on the part of groups of data streams in the plurality of groups of data streams.

According to the communication apparatus provided in this application, in a process of performing THP on a data stream, an interference cancellation matrix is designed as a block triangular matrix. The interference cancellation and the modulo operation on all data streams (at a data stream granularity) of a terminal device are replaced with the interference cancellation and the modulo operation between groups of data streams (at a granularity of a group of data streams) by using the block triangular matrix, that is, the interference cancellation and the modulo operation are performed only on the part of groups of data streams in the plurality of groups of data streams. This reduces a quantity of data streams on which the network device needs to perform the interference cancellation and the modulo operation, to reduce a calculation amount of the network device, effectively reduce complexity of a precoding process performed by the network device, and reduce resource consumption.

In some possible implementations, the transceiver unit 920 is further configured to send a DMRS.

In some possible implementations, the transceiver unit 920 is further configured to: separately send one group of data streams to a plurality of terminal devices, where each group of data streams corresponds to one terminal device; and separately send the indication information to a part of terminal devices in the plurality of terminal devices, where each piece of indication information indicates the terminal device to perform the power adjustment and the modulo operation on one group of received data streams.

In some possible implementations, each piece of indication information further indicates a power difference between an equivalent channel of one group of data streams corresponding to the terminal device and an equivalent channel corresponding to the DMRS.

In some possible implementations, each group of data streams in the part of groups of data streams includes a same quantity of data streams.

In some possible implementations, the transceiver unit 920 is further configured to: separately send one group of data streams to two terminal devices; and send the indication information to one terminal device in the two terminal devices, where the indication information indicates the terminal device to perform the power adjustment and the modulo operation on one group of received data streams.

In some possible implementations, the transceiver unit 920 is further configured to: send a plurality of groups of data streams to one terminal device; and send the indication information to the terminal device, where the indication information indicates to perform the power adjustment and the modulo operation on a part of groups of data streams in the plurality of groups of data streams.

In some possible implementations, the indication information includes DMRS port numbers corresponding to data streams included in the part of groups of data streams.

In some possible implementations, the indication information includes a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams.

In some possible implementations, the indication information includes an identifier of an antenna port group corresponding to the part of groups of data streams.

In some possible implementations, in the plurality of groups of data streams, the DMRS port number corresponding to the data stream on which the power adjustment and the modulo operation are performed is predefined or preconfigured.

In some possible implementations, the indication information further indicates a power difference between an equivalent channel of each group of data streams in the part of groups of data streams and the equivalent channel corresponding to the DMRS.

In some possible implementations, the transceiver unit 920 is further configured to send two groups of data streams to one terminal device, where the indication information indicates to perform the power adjustment and the modulo operation on one group of data streams in the two groups of data streams.

In some possible implementations, each group of data streams in the plurality of groups of data streams includes a same quantity of data streams.

It should be understood that, for a specific process in which the units in the communication apparatus 900 perform the foregoing corresponding steps, refer to the foregoing descriptions related to the network device with reference to the related embodiment in the method 400 and/or the method 600. For brevity, details are not described herein again.

Optionally, the transceiver unit 920 may include a receiving unit (module) and a sending unit (module), configured to perform the steps of receiving information and sending information by the network device in the embodiment in the method 400 and/or the method 600.

Further, the communication apparatus 900 may further include a storage unit. The transceiver unit 920 may be a transceiver, an input/output interface, or an interface circuit. The storage unit is configured to store instructions executed by the transceiver unit 920 and the processing unit 910. The transceiver unit 920, the processing unit 910, and the storage unit are coupled to each other. The storage unit stores the instructions. The processing unit 910 is configured to execute the instructions stored in the storage unit. The transceiver unit 920 is configured to perform specific signal receiving and sending under the control of the processing unit 910.

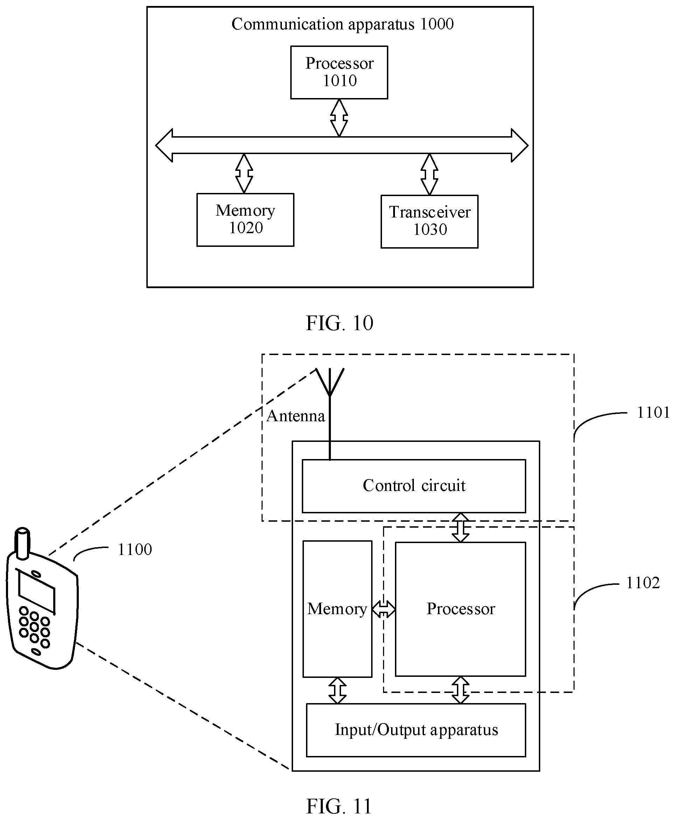

It should be understood that the transceiver unit 920 may be the transceiver, the input/output interface, or the interface circuit. The storage unit may be a memory. The processing unit 910 may be implemented by a processor. As shown in FIG. 10, a communication apparatus 1000 may include a processor 1010, a memory 1020, and a transceiver 1030.

The communication apparatus 900 shown in FIG. 9 or the communication apparatus 1000 shown in FIG. 10 can implement the steps performed by the network device in the method 400 and/or the method 600. For similar descriptions, refer to the descriptions in the foregoing corresponding methods. To avoid repetition, details are not described herein again.

It should be further understood that the communication apparatus 900 shown in FIG. 9 or the communication apparatus 1000 shown in FIG. 10 may be a network device, or a network device may include the communication apparatus 900 shown in FIG. 9 or the communication apparatus 1000 shown in FIG. 10.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, the steps in the foregoing methods or the foregoing units may be implemented by using a hardware integrated logic circuit in a processor element, or may be implemented in the form of software invoked by the processing element.

For example, a unit in any one of the foregoing apparatuses may be one or more integrated circuits configured to implement the foregoing methods, for example, one or more application-specific integrated circuits (application specific-integrated circuit, ASIC), one or more DSPs, one or more field programmable gate arrays (field programmable gate arrays, FPGAs), or a combination of at least two of the integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

FIG. 11 is a diagram of a structure of a terminal device 1100 according to this application. The communication apparatus 700 or the communication apparatus 800 may be configured in the terminal device 1100. Alternatively, the communication apparatus 700 or the communication apparatus 800 may be the terminal device 1100. In other words, the terminal device 1100 may perform an action performed by the terminal device in either the method 400 or method 600. Optionally, for ease of description, FIG. 11 shows only main components of the terminal device. As shown in FIG. 11, the terminal device 1100 includes a processor, a memory, a control circuit, an antenna, and an input/output apparatus.

The processor is mainly configured to: process a communication protocol and communication data; control an entire terminal device; execute a software program; and process data of the software program. For example, the processor is configured to support the terminal device in performing an action described in the foregoing data transmission method embodiments. The memory is mainly configured to store the software program and the data, for example, store expected handover information described in the foregoing embodiments. The control circuit is mainly configured to: convert a baseband signal and a radio frequency signal and process the radio frequency signal. The control circuit and the antenna together may also be referred to as a transceiver, and are mainly configured to: receive and send a radio frequency signal in a form of an electromagnetic wave, for example, send the expected handover information described in the foregoing embodiments. The input/output apparatus, like a touchscreen, a display, or a keyboard, is mainly configured to: receive data input by a user and output data to the user.

After the terminal device is powered on, the processor may read the software program in the storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, the radio frequency signal in the form of the electromagnetic wave. When data (for example, the foregoing plurality of groups of data streams or indication information) is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 11 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 11 integrates functions of the baseband processor and the central processing unit. A person skilled in the art may understand that the baseband processor and the central processing unit may alternatively be processors independent of each other, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, an antenna that has a transceiver function and the control circuit may be considered as a transceiver unit 1101 of the terminal device 1100, and the processor having a processing function may be considered as a processing unit 1102 of the terminal device 1100. As shown in FIG. 11, the terminal device 1100 includes the transceiver unit 1101 and the processing unit 1102. The transceiver unit may also be referred to as a transceiver, a transceiver machine, a transceiver apparatus, or the like. Optionally, a component configured to implement a receiving function in the transceiver unit 1101 may be considered as a receiving unit, and a component configured to implement a sending function in the transceiver unit 1101 may be considered as a sending unit. In other words, the transceiver unit 1101 includes a receiving unit and a sending unit. For example, the receiving unit may also be referred to as a receiver, a receive machine, or a receiving circuit, and the sending unit may also be referred to as a transmitter, a transmit machine, or a transmitting circuit.

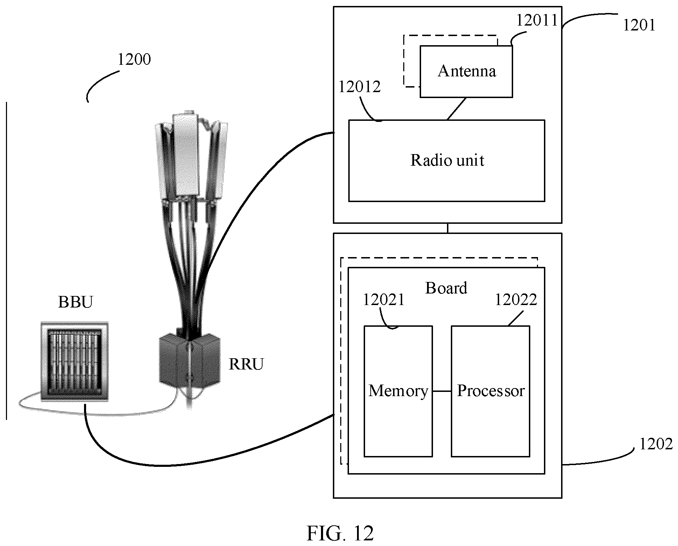

FIG. 12 is a diagram of a structure of a network device 1200 according to an embodiment of this application. The network device 1200 may be configured to implement functions of the network device in the foregoing method. The network device 1200 includes one or more radio units, such as a remote radio unit (remote radio unit, RRU) 1201 and one or more baseband units (baseband units, BBUs) (which may also be referred to as digital units (digital units, DUs)) 1202. The RRU 1201 may be referred to as a transceiver unit, a transceiver machine, a transceiver circuit, a transceiver, or the like, and may include at least one antenna 12011 and a radio unit 12012. The RRU 1201 part is mainly configured to: receive and send a radio frequency signal and perform conversion between the radio frequency signal and a baseband signal, for example, configured to send the plurality of groups of data streams and indication information in the foregoing embodiments to the terminal device. The BBU 1202 part is mainly configured to: perform baseband processing, control a base station, and the like. The RRU 1201 and the BBU 1202 may be physically disposed together, or may be physically disposed separately, namely, a distributed base station.

The BBU 1202 is a control center of the base station, may also be referred to as a processing unit, and is mainly configured to perform baseband processing functions such as channel coding, multiplexing, modulation, or spreading. For example, the BBU (the processing unit) 1202 may be configured to control the base station to perform an operation procedure related to the network device in the foregoing method embodiments.

For example, the BBU 1202 may include one or more boards. A plurality of boards may jointly support a radio access network (for example, an LTE system or a 5G system) of a single access standard, or may respectively support radio access networks of different access standards. The BBU 1202 further includes a memory 12021 and a processor 12022. The memory 12021 is configured to store instructions and data that are necessary. For example, the memory 12021 stores the indication information, the preset condition, and the like in the foregoing embodiments. The processor 12022 is configured to control the base station to perform a necessary action, for example, configured to control the base station to perform an operation procedure related to the network device in the foregoing method embodiments. The memory 12021 and the processor 12022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or some functions of the parts 1202 and 1201 may be implemented by using the SoC technology, for example, implemented by using one base station function chip. The base station function chip integrates devices such as a processor, a memory, and an antenna port. A program for a related function of the base station is stored in the memory. The processor executes the program to implement the related function of the base station. Optionally, the base station function chip can also read from an external memory of the chip, to implement the related function of the base station.

It should be understood that the structure of the network device shown in FIG. 12 is merely a possible form, but should not constitute any limitation on embodiments of this application. In this application, a possibility that there may be a base station structure in another form in the future is not excluded.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an EPROM, an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a communication system. The communication system includes the foregoing terminal device and the foregoing network device.

All or some of the foregoing embodiments may be implemented using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner.

An embodiment of this application further provides a computer-readable medium, configured to store computer program code. The computer program includes instructions used to perform any data transmission method provided in the foregoing embodiments of this application. The readable medium may be the memory in the foregoing example. This is not limited in this embodiment of this application.

This application further provides a computer program product. The computer program product includes instructions. When the instructions are executed, a terminal device is enabled to perform an operation of the terminal device corresponding to the foregoing method, or a network device is enabled to perform an operation of the network device corresponding to the foregoing method.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a chip in the communication apparatus performs any data transmission method provided in the foregoing embodiments of this application.

Optionally, any communication apparatus provided in the foregoing embodiments of this application may include the system chip.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. The processor described above may be a CPU, a microprocessor, an ASIC, or one or more integrated circuits configured to control execution of a program for the foregoing master system information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In this application, names may be assigned to various objects such as messages/information/devices/systems/apparatuses/actions/operations/procedures. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:

   sending, by a network device, a plurality of groups of data streams, wherein each group of data streams comprises a plurality of data streams; and
   sending, by the network device, indication information, wherein the indication information indicates to perform power adjustment and a modulo operation on a part of groups of data streams in the plurality of groups of data streams.

2. The method according to claim 1, wherein the sending, by a network device, a plurality of groups of data streams comprises:

   separately sending, by the network device, one group of data streams to a plurality of terminal devices, wherein each group of data streams corresponds to one terminal device;
   the sending, by the network device, indication information comprises:

      separately sending, by the network device, the indication information to a part of terminal devices in the plurality of terminal devices; and

that the indication information indicates to perform power adjustment and a modulo operation on a part of groups of data streams in the plurality of groups of data streams comprises:

each piece of indication information indicates the terminal device to perform the power adjustment and the modulo operation on one group of received data streams.

3. The method according to claim 2, wherein each piece of indication information further indicates a power difference between an equivalent channel of one group of data streams corresponding to the terminal device and an equivalent channel corresponding to a DMRS.

4. The method according to claim 2 or 3, wherein each group of data streams in the part of groups of data streams comprises a same quantity of data streams.

5. The method according to any one of claims 2 to 4, wherein the sending, by a network device, a plurality of groups of data streams comprises:

separately sending, by the network device, one group of data streams to two terminal devices; and
the sending, by the network device, indication information comprises:
sending, by the network device, the indication information to one terminal device in the two terminal devices, wherein the indication information indicates the terminal device to perform the power adjustment and the modulo operation on one group of received data streams.

6. The method according to claim 1, wherein the sending, by a network device, a plurality of groups of data streams comprises:

sending, by the network device, the plurality of groups of data streams to one terminal device; and
the sending, by the network device, indication information comprises:
sending, by the network device, the indication information to the terminal device, wherein the indication information indicates to perform the power adjustment and the modulo operation on the part of groups of data streams in the plurality of groups of data streams.

7. The method according to claim 6, wherein the indication information comprises DMRS port numbers corresponding to data streams comprised in the part of groups of data streams.

8. The method according to claim 7, wherein the indication information comprises a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams.

9. The method according to claim 6, wherein the indication information comprises an identifier of an antenna port group corresponding to the part of groups of data streams.

10. The method according to claim 6, wherein a DMRS port number corresponding to a data stream on which the power adjustment and the modulo operation are performed in the plurality of groups of data streams is predefined or preconfigured.

11. The method according to any one of claims 6 to 10, wherein the indication information further indicates a power difference between an equivalent channel of each group of data streams in the part of groups of data streams and an equivalent channel corresponding to a DMRS.

12. The method according to any one of claims 6 to 11, wherein the sending, by the network device, the plurality of groups of data streams to one terminal device comprises:

sending, by the network device, two groups of data streams to one terminal device, wherein
the indication information indicates to perform the power adjustment and the modulo operation on one group of data streams in the two groups of data streams.

13. The method according to any one of claims 6 to 12, wherein each group of data streams in the plurality of groups of data streams comprises a same quantity of data streams.

**14.** A data transmission method, wherein the method comprises:

receiving, by a terminal device, one group of data streams or a plurality of groups of data streams, wherein each group of data streams comprises a plurality of data streams; and

receiving, by the terminal device, indication information, wherein the indication information indicates to perform power adjustment and a modulo operation on the one group of received data streams, or the indication information indicates to perform power adjustment and a modulo operation on a part of groups of data streams in the plurality of groups of data streams.

**15.** The method according to claim 14, wherein when the terminal device receives the one group of data streams, the indication information further indicates a power difference between an equivalent channel of the one group of data streams corresponding to the terminal device and an equivalent channel corresponding to a DMRS.

**16.** The method according to claim 14, wherein when the terminal device receives the plurality of groups of data streams, the indication information comprises DMRS port numbers corresponding to data streams comprised in the part of groups of data streams.

**17.** The method according to claim 16, wherein the indication information comprises a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams.

**18.** The method according to claim 16, wherein the indication information comprises an identifier of an antenna port group corresponding to the part of groups of data streams.

**19.** The method according to claim 16, wherein a DMRS port number corresponding to a data stream on which the power adjustment and the modulo operation are performed in the plurality of groups of data streams is predefined or preconfigured.

**20.** The method according to any one of claims 16 to 19, wherein the indication information further indicates a power difference between an equivalent channel of each group of data streams in the part of groups of data streams and an equivalent channel corresponding to a DMRS.

**21.** The method according to any one of claims 16 to 20, wherein the receiving, by a terminal device, a plurality of groups of data streams comprises:

receiving, by the terminal device, two groups of data streams, wherein the indication information indicates to perform the power adjustment and the modulo operation on one group of data streams in the two groups of data streams.

**22.** The method according to any one of claims 16 to 21, wherein each group of data streams in the plurality of groups of data streams comprises a same quantity of data streams.

**23.** A communication apparatus, wherein the communication apparatus comprises a transceiver unit, and the transceiver unit is configured to:

send a plurality of groups of data streams, wherein each group of data streams comprises a plurality of data streams; and

send indication information, wherein the indication information indicates to perform power adjustment and a modulo operation on a part of groups of data streams in the plurality of groups of data streams.

**24.** The communication apparatus according to claim 23, wherein the transceiver unit is further configured to:

separately send one group of data streams to a plurality of terminal devices, wherein each group of data streams corresponds to one terminal device; and

separately send the indication information to a part of terminal devices in the plurality of terminal devices, wherein each piece of indication information indicates the terminal device to perform the power adjustment and the modulo operation on one group of received data streams.

25. The communication apparatus according to claim 24, wherein each piece of indication information further indicates a power difference between an equivalent channel of one group of data streams corresponding to the terminal device and an equivalent channel corresponding to a DMRS.

26. The communication apparatus according to claim 24 or 25, wherein each group of data streams in the part of groups of data streams comprises a same quantity of data streams.

27. The communication apparatus according to any one of claims 24 to 26, wherein the transceiver unit is further configured to:

separately send one group of data streams to two terminal devices; and
send the indication information to one terminal device in the two terminal devices, wherein the indication information indicates the terminal device to perform the power adjustment and the modulo operation on one group of received data streams.

28. The communication apparatus according to claim 23, wherein the transceiver unit is further configured to:

send the plurality of groups of data streams to one terminal device; and
send the indication information to the terminal device, wherein the indication information indicates to perform the power adjustment and the modulo operation on the part of groups of data streams in the plurality of groups of data streams.

29. The communication apparatus according to claim 28, wherein the indication information comprises DMRS port numbers corresponding to data streams comprised in the part of groups of data streams.

30. The communication apparatus according to claim 29, wherein the indication information comprises a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams.

31. The communication apparatus according to claim 28, wherein the indication information comprises an identifier of an antenna port group corresponding to the part of groups of data streams.

32. The communication apparatus according to claim 28, wherein a DMRS port number corresponding to a data stream on which the power adjustment and the modulo operation are performed in the plurality of groups of data streams is predefined or preconfigured.

33. The communication apparatus according to any one of claims 28 to 32, wherein the indication information further indicates a power difference between an equivalent channel of each group of data streams in the part of groups of data streams and an equivalent channel corresponding to a DMRS.

34. The communication apparatus according to any one of claims 28 to 33, wherein the transceiver unit is further configured to:
send two groups of data streams to one terminal device, wherein the indication information indicates to perform the power adjustment and the modulo operation on one group of data streams in the two groups of data streams.

35. The communication apparatus according to any one of claims 28 to 34, wherein each group of data streams in the plurality of groups of data streams comprises a same quantity of data streams.

36. A communication apparatus, wherein the communication apparatus comprises a transceiver unit, and the transceiver unit is configured to:

receive one group of data streams or a plurality of groups of data streams, wherein each group of data streams comprises a plurality of data streams; and
receive indication information, wherein the indication information indicates to perform power adjustment and a modulo operation on the one group of received data streams, or the indication information indicates to perform power adjustment and a modulo operation on a part of groups of data streams in the plurality of groups of data streams.

37. The communication apparatus according to claim 36, wherein when the receiving unit receives one group of data streams, the indication information further indicates a power difference between an equivalent channel of one group of data streams corresponding to the terminal device and an equivalent channel corresponding to a DMRS.

38. The communication apparatus according to claim 36, wherein when the receiving unit receives a plurality of groups of data streams, the indication information comprises DMRS port numbers corresponding to data streams comprised in the part of groups of data streams.

39. The communication apparatus according to claim 38, wherein the indication information comprises a bitmap, and the bitmap indicates a DMRS port umber corresponding to a data stream on which the power adjustment and the modulo operation are performed in the plurality of groups of data streams, and a DMRS port number corresponding to a data stream on which the power adjustment and the modulo operation are not performed in the plurality of groups of data streams.

40. The communication apparatus according to claim 38, wherein the indication information comprises an identifier of an antenna port group corresponding to the part of groups of data streams.

41. The communication apparatus according to claim 38, wherein a DMRS port number corresponding to a data stream on which the power adjustment and the modulo operation are performed in the plurality of groups of data streams is predefined or preconfigured.

42. The communication apparatus according to any one of claims 38 to 41, wherein the indication information further indicates a power difference between an equivalent channel of each group of data streams in the part of groups of data streams and an equivalent channel corresponding to a DMRS.

43. The communication apparatus according to any one of claims 38 to 42, wherein the transceiver unit is further configured to:
receive two groups of data streams, wherein the indication information indicates to perform the power adjustment and the modulo operation on one group of data streams in the two groups of data streams.

44. The communication apparatus according to any one of claims 38 to 43, wherein each group of data streams in the plurality of groups of data streams comprises a same quantity of data streams.

45. A communication apparatus, comprising at least one processor and an interface circuit, wherein the interface circuit is configured to: input and/or output a signal, and the at least one processor is configured to perform the method according to any one of claims 1 to 13 or the method according to any one of claims 14 to 22.

46. A computer-readable storage medium, wherein the computer-readable storage medium stores a computer program or instructions, and when a computer reads and executes the computer program or the instructions, the computer is enabled to perform the method according to any one of claims 1 to 13 or the method according to any one of claims 14 to 22.

47. A chip, comprising a processor, configured to: invoke a computer program from a memory and run the computer program, to enable a communication device mounted with the chip to perform the method according to any one of claims 1 to 13 or the method according to any one of claims 14 to 22.

Sub-receiver

Terminal device

Network device

A plurality of transmit antennas of the network device

Antenna group

MIMO detection module with a rank (rank) of 4

×  ×  ×  ×
×  ×  ×  ×
×  ×  ×  ×
×  ×  ×  ×

Interference suppression between antenna groups

× ×
× ×

MMSE equalization

Demodulation/ Decoding Codeword 0

× ×
× ×

MIMO detection module with a rank (rank) of 4

MMSE equalization

Demodulation/ Decoding Codeword 1

Antenna group

Sub-receiver

FIG. 1

EP 4 576 633 A1

FIG. 2

FIG. 3

Method 400

Network device                                          Terminal
                                                        device

S410: Determine a block triangular matrix B
based on a channel matrix $H_1$ and a channel
matrix $H_2$, where a channel matrix
corresponding to a first group of data streams is
$H_1$, and a channel matrix corresponding to a
second group of data streams is $H_2$

S420: Perform, based on the block triangular
matrix B, interference cancellation at a
granularity of a group of data streams, to
obtain transmit data vectors corresponding to
the first group of data streams and the second
group of data streams

S430: Perform non-linear precoding processing
on the transmit data vectors

S440: Send a first group of data streams and a second
group of data streams obtained through the non-linear
precoding processing

S450: Precode a DMRS

S460: Send a precoded DMRS

FIG. 4

FIG. 5

Method 600

S610: Send indication information, where the indication information indicates power adjustment and a modulo operation that are to be performed on a second group of data streams, and a power adjustment parameter used to perform the power adjustment

S620: After receiving a first group of data streams and the second group of data streams, determine a data signal vector corresponding to each group of data streams

S630: After receiving a DMRS, determine, based on the DMRS, equivalent channel matrices respectively corresponding to the first group of data streams and the second group of data streams

S640: Separately detect, based on the equivalent channel matrices corresponding to the first group of data streams and the second group of data streams and the indication information, data signal vectors corresponding to the first group of data streams and the second group of data streams

FIG. 6

Communication apparatus 700

Transceiver unit 710

Processing unit 720

FIG. 7

Communication apparatus 800

810

Processor

840

820

Memory

Bus system

830

Transceiver

FIG. 8

Communication apparatus 900

Processing unit 910

Transceiver unit 920

FIG. 9

Communication apparatus 1000

Processor
1010

Memory
1020

Transceiver
1030

FIG. 10

Antenna

1101

Control circuit

1100

Memory

Processor

1102

Input/Output apparatus

FIG. 11

FIG. 12

## INTERNATIONAL SEARCH REPORT

| International application No. |
| --- |
| **PCT/CN2023/117680** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L; H04W

Documentation searched other than minimum documentation to the extent that such documents are included in the fields searched

Electronic data base consulted during the international search (name of data base and, where practicable, search terms used)

CNTXT, ENTXTC, WPABSC, 3GPP, CJFD: 部分, 层, 功率调整, 空间层, 空间流, 流, 模操作, 某些, 数据流, 一些, 组, group?, layer?, stream+, modulo+

### C. DOCUMENTS CONSIDERED TO BE RELEVANT

| Category* | Citation of document, with indication, where appropriate, of the relevant passages | Relevant to claim No. |
| --- | --- | --- |
| X | US 2015124765 A1 (HUAWEI TECHNOLOGIES CO., LTD.) 07 May 2015 (2015-05-07) description, paragraphs [0023]-[0143], and figures 1-5 | 1-47 |
| A | WO 2017069510 A1 (SAMSUNG ELECTRONICS CO., LTD.) 27 April 2017 (2017-04-27) entire document | 1-47 |
| A | WO 2018046089 A1 (HUAWEI TECHNOLOGIES CO., LTD. et al.) 15 March 2018 (2018-03-15) entire document | 1-47 |
| A | WO 2020107188 A1 (GUANGDONG OPPO MOBILE TELECOMMUNICATIONS CO., LTD.) 04 June 2020 (2020-06-04) entire document | 1-47 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 November 2023** | **24 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/117680**

| Patent document cited in search report | | | Publication date (day/month/year) | Patent family member(s) | | | Publication date (day/month/year) |
|---|---|---|---|---|---|---|---|
| US | 2015124765 | A1 | 07 May 2015 | US | 9537553 | B2 | 03 January 2017 |
| | | | | EP | 2863689 | A1 | 22 April 2015 |
| | | | | EP | 2863689 | A4 | 30 December 2015 |
| | | | | EP | 2863689 | B1 | 07 June 2017 |
| | | | | WO | 2014019385 | A1 | 06 February 2014 |
| WO | 2017069510 | A1 | 27 April 2017 | KR | 20180057611 | A | 30 May 2018 |
| WO | 2018046089 | A1 | 15 March 2018 | None | | | |
| WO | 2020107188 | A1 | 04 June 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211105463